(19) Europäisches Patentamt
European Patent Office
Office européen des brevets

(11) **EP 1 531 572 B1**

(12) **EUROPEAN PATENT SPECIFICATION**

(45) Date of publication and mention
of the grant of the patent:
**07.02.2007 Bulletin 2007/06**

(51) Int Cl.:
***H04L 25/03*** (2006.01)

(21) Application number: **04030138.4**

(22) Date of filing: **03.06.1998**

(54) **Method for non-coherently estimating sequences of symbols impressed on a digitally modulated transmission carrier**

Verfahren zum nichtkohärenten Schätzen von mittels einem digital modulierten Träger übertragenen Symbolsequenzen

Procédé d'estimation non-cohérente de séquences de symboles transmis par une porteuse modulée numériquement.

(84) Designated Contracting States:
**DE FI FR GB IT SE**

(30) Priority: **03.06.1997 IT MI971301**

(43) Date of publication of application:
**18.05.2005 Bulletin 2005/20**

(62) Document number(s) of the earlier application(s) in accordance with Art. 76 EPC:
**98932145.0 / 0 985 302**

(73) Proprietor: **Siemens S.p.A.**
**20126 Milano (IT)**

(72) Inventors:
• **Colavolpe, Giulio**
**87032 Amantea (IT)**
• **Raheli, Riccardo**
**43100 Parma (IT)**

(74) Representative: **Giustini, Delio**
**Siemens S.p.A.**
**V. le Piero e Alberto Pirelli, 10**
**20126 Milano (IT)**

(56) References cited:
• **D'ANDREA A N ET AL: "APPROXIMATE ML DECODING OF CODED PSK WITH NO EXPLICIT CARRIER PHASE REFERENCE" IEEE TRANSACTIONS ON COMMUNICATIONS, vol. 42, no. 2/3/4, 1 February 1994 (1994-02-01), pages 1033-1039, XP000447352**

• **RAPHAELI D: "NONCOHERENT CODED MODULATION" IEEE TRANSACTIONS ON COMMUNICATIONS, vol. 44, no. 2, 1 February 1996 (1996-02-01), pages 172-183, XP000554667**
• **P. Y. KAM ET AL: "A Viterbi-type algorithm for efficient estimation of M-PSK sequences over the Gaussian channel with unknown carrier phase" IEEE TRANSACTIONS ON COMMUNICATIONS, vol. 43, no. 9, September 1995 (1995-09), pages 2429-2433, XP002089277 USA, ISSN 0090-6778**
• **RAHELI R ET AL: "PER-SURVIVOR PROCESSING: A GENERAL APPROACH TO MLSE IN UNCERTAIN ENVIRONMENTS" IEEE TRANSACTIONS ON COMMUNICATIONS, vol. 43, no. 2/03/04, 2 February 1995 (1995-02-02), pages 354-360, XP002059868**
• **COLAVOLPE G ET AL: "NON-COHERENT SEQUENCE DETECTION OF M-ARY PSK" 1997 IEEE INTERNATIONAL CONFERENCE ON COMMUNICATIONS, MONTREAL, vol. 1, 8 June 1997 (1997-06-08), - 12 June 1997 (1997-06-12) pages 21-25, XP000740196 INSTITUTE OF ELECTRICAL AND ELECTRONICS ENGINEERS**
• **COLAVOLPE G ET AL: "Non-coherent sequence detection of QAM" PROCEEDINGS OF THE 1997 IEEE INTERNATIONAL SYMPOSIUM ON INFORMATION THEORY, ULM, GERMANY, 29 June 1997 (1997-06-29), - 4 July 1997 (1997-07-04) page 536, XP002089321 ISBN 0-7803-3956-8, 1997, IEEE, New York, NY, USA**

**Description**

Field of the Invention

The present invention relates to the field of digital modulated radio signals and more in particular to a method for non-coherently estimating sequences of symbols impressed on a digitally modulated transmission carrier. Both linear M-PSK or M-QAM and non-linear CPM (Continuous Phase Modulation) modulations are considered. The communication channel is assumed at the beginning as ideal and affected by AWGN noise (Additive White Gaussian Noise). Afterwards, the channel ideality assumption is removed and the presence of ISI (Intersymbol Interference) is considered in the demodulated signal. In the considered technical field there are different classes of receivers for such type of channels.

Background Art

A first class of receivers is based on the structure of an optimum coherent receiver, that is, a receiver that minimizes the error possibility on symbols decided should the synchronism be perfectly known, and in particular, the phase of the signal received, which will be dealt with hereafter. The implementation of such a receiver does not show particular problems in a laboratory environment, where in fact, the modulation carrier is always available, but it cannot be followed up in practice when this receiver is placed in field and the carrier is not available. In these cases, a preferred solution is to supply the receiver with a synchronization device enabling to «recover» the information on the phase of the modulated carrier. The devices more used to this purpose are phase locked loops (Phase Locked Loop, or PLL). Such a receiver shall be hereinafter defined «pseudocoherent", since it is implemented according to the configuration of a coherent receiver to which a phase reference is supplied by said synchronization device. In these receivers the phase is recovered at less than $2\pi/n$ multiples, where n depends on the type of modulation adopted. As a consequence of the ambiguity on the phase introduced by the PLL, a differential coding must be used in transmission, that is a coding where the information is not associated to the absolute phase of the modulation carrier, but to the phase difference between two consecutive symbols. As an alternative to the differential coding it is possible to use pilot symbols during transmission, as described hereafter.

A second class of receivers consists of non-coherent receivers, that is those not requiring the information on the absolute phase of the transmitted signal. These receivers have different advantages compared to pseudo coherent receivers, namely:

1. They can be employed in situations where the synchronization recovery results to be difficult, such as for instance in the case of fading channels, or in presence of shift Doppler, or of frequency jumps due to the instability of oscillators;
2. They are simpler and cost effective since they have no PLL;
3. The synchronization state is not lost, contrarily to receivers with PLL where this loss can occur due to phase jumps, false locking or loss of the locking state;
4. after an out-of-duty interval caused by deep fading they are immediately operative, contrarily to receivers with PLL that require a transient period to recover the locking condition;
5. they can be employed in time division multiple access communication systems (Time Division Multiple Access, or TDMA), where the coherent detection is not recommended due to the comparatively long acquisition time of the synchronism.

The first non-coherent receivers considered in technical literature were differential receivers, often employed in the detection of modulated phase digital signals, or PSK (Phase Shift Keying), where a differential coding ties the information to the phase difference between two consecutive PSK symbols. The receiver estimates this phase difference, not requiring therefore to be locked in phase with the signal received. A possible interpretation of the operation of these receivers is the following: with the differential coding process, the phase reference necessary for the data estimate is contained in the preceding symbol. Therefore it is not necessary to determine an absolute phase reference, since the preceding symbol can be used to this purpose. However, this involves a degrade of performance compared to a coherent receiver, due to the fact that in differential detection the phase reference is noisy, while in the coherent detection this reference is perfectly known and therefore noise free. We could say that in the case of differential detection the signal to noise ratio (Signal-to-Noise Ratio, or SNR) of the reference signal is the same of the SNR of the information signal. In the case of a coherent receiver, on the contrary, the SNR of the reference signal is infinite from the theoretical point of view. For instance, in the case of PSK modulations with two phase values only or BPSK (Binary PSK) the loss is small, that is 0,8 dB approximately at BER (Bit Error Rate) of $10^{-5}$. On the contrary, in the case of PSK modulations with M > 2 phase values, or M-PSK, the performance loss can reach 3 dB.

Starting from the above considerations, differential receivers have been conceived drawing the phase reference from a given number of past symbols in order to "filter" the noise effect. In this way the SNR of the phase reference changes to a higher quality and the performance come closer to those of a coherent receiver. This type of receivers employing a so-called «decision reaction» are described, for instance in the following papers:

- «The phase of a vector perturbed by Gaussian noise and differentially coherent receivers», authors: H. Leib, S. Pasupathy, published on IEEE Trans. Inform. Theory, vol. 34, pp.1491-1501, November 1988.
- «Bit error rate of binary and quaternary DPSK signals with multiple differential feedback detection», author F. Edbauer, published on IEEE Trans. Commun., vol. 40, pp. 457-460, March 1992.
  They can be considered the forerunners of block differential receivers, or N-differential, described below.
  Block differential receivers fill the performance gap between coherent performance and simply differential ones, and are well described in the following papers:

  - «Multi-symbol detection of M-DPSK", authors: G. Wilson, J. Freebersyser and C. Marshall, published following the Proceedings of IEEE GLOBECOM, pp.1692-1697, November 1989;
  - «Multiple-symbol differential detection of MPSK», authors: D. Divsalar and M. K. Simon, published on IEEE Trans. Commun., vol. 38, pp.300-308, March 1990;
  - «Non-coherent block demodulation of PSK", authors: H. Leib, S. Pasupathy, published following the Proceedings of IEEE VTC, pp.407-411, May 1990;
  - and in the volume under the title «Digital communication techniques», authors: M. K. Simon, S. M. Hinedi and W. C. Lindsey, published by Prentice Hall, Englewood Cliffs, 1995, for the case of M-PSK modulations.

Block differential receivers, as well as those adopting the «decision reaction», are grounded on the idea to extend the observation interval on which decisions are based, compared to the observation interval of two symbols only, typical of simply differential receivers. For these last, there is an additional peculiarity, which is that to decide on more symbols at the same time, instead of symbol by symbol. N-differential receivers use an observation window of N symbols, and simultaneously make the decision on N-1 information symbols. This decision strategy can be seen as an extension of the decision strategy of differential receivers, which in fact correspond to case N = 2. It has been demonstrated that in the case of M-PSK modulations, for N $\rightarrow$ +∞ the performance of this type of receivers tend to those of the coherent receiver. Number of examples of block differential receivers can be found in literature, suitable to the different modulations; some of them are described in the papers mentioned above. In addition, we point out that:

- M-PSK modulations with channel coding are described in the paper under the title «The performance of trellis-coded MDPSK with multiple symbol detection", authors: D. Divsalar, M. K. Simon and M. Shahshahani, published on IEEE Trans. Commun., vol. 38, pp.1391-1403, September 1990;
- M-QAM coded and uncoded modulations (Quadrant Amplitude Modulation) are dealt with in the essay «Maximum-likelihood differential detection of uncoded and trellis coded amplitude phase modulation over AWGN and fading channels - metrics and performance", authors: D. Divsalar and M. K. Simon, published on IEEE Trans. Commun., vol. 42, pp.76-89, January 1994;
- M-PSK and M-QAM modulations in fading channels, are treated in the previous article and in the one under the title «Optimal decoding of coded PSK and QAM signals in correlated fast fading channels and AWGN: a combined envelope, multiple differential and coherent detection approach", authors: D. Makrakis, P. T. Mathiopoulos and D. P.

Bouras, published on IEEE Trans. Commun., vol. 42, pp.63-75, January 1994. Some disadvantage, common to all the block differential or N-differential receivers, described in the extensive literature mentioned above, are caused by the type of strategy used in the decision, consisting in an exhaustive research made on the single data blocks. Therefore it is necessary to use small N values, otherwise calculations would exceedingly complicate even for small sizes of the input alphabet, practically impairing the realization of the receivers. To overcome this difficulty, the skilled in the art could think to estimate the sequence transmitted using the Viterbi algorithm, however he should come shortly to the conclusion that this way is not practicable since the metric can be made recurrent in no one of the receivers described. In the light of the above, some N-differential receivers are known, employing, though inappropriately, the Viterbi algorithm. In the case of M-PSK modulations, these receivers have been, described in the following articles:

- «Non-coherent coded modulation", author D. Raphaeli, published on IEEE Trans. Commun., vol. 44, pp.172-183, February 1996;
- «A Viterbi-type algorithm for efficient estimation of M-PSK sequences over the Gaussian channel with unknown carrier phase", authors: P. Y. Kam and P. Sinha, published on IEEE Trans. Commun., vol. 43, pp.2429-2433, September 1995.

Non-coherent receivers described by D. Raphaeli, representing the more pertinent known art, are based on maximally overlapped observations that is extended to N-1 symbols preceding the present one, assumed as independent, even if they are not in reality, as the author clearly admits. We can also observe that metrics used are identical to those euristically assigned to the most recent symbols in the receivers described by P. Y. Kam and P. Sinha, where decisions are locally made, at each node of a trellis diagram. In this case there is no accumulation of metrics as, on the contrary, it occurs in the classical Viterbi algorithm. The interesting thing to be noticed in receivers described by D. Raphaeli is that they reach a good operation performance, though inappropriately using the Viterbi algorithm. The approximation introduced, consists in having in a recurrent way, the metrics of the previous N-differential block receivers to the sole purpose of employing the Viterbi algorithm, but without basing the assumptions on metrics and their use in the algorithm context, on effective and convincing theoretical postulates, justifying this recurrence relation. The performance of these receivers, while good, finds however a limit in the approximation introduced.

Objects of the Invention

Therefore object of the present invention is to additionally improve the performance of the known non-coherent receivers, at equal complexity level, or to reduce the complexity, at equal performance, and to indicate a non-coherent reception method of coded symbol sequences transmitted on a communication channel, affected by additive Gaussian noise, based on a more effective use of the Viterbi algorithm for the maximum likelihood estimation of the sequence transmitted. The aforementioned object is desirable to be obtained in the following cases:

1. Linear digital modulations, either with coded symbol or not, impressed on a carrier transmitted on an ideal channel affected by AWGN noise.
2. Linear digital modulations, either with coded symbol or not, impressed on a carrier transmitted on a non-ideal channel (dispersive) affected by Gaussian noise and introducing ISI on the crossing signal.
3. Non-linear CPM modulation introducing ISI (obviously).

Summary of the Invention

The invention achieves said objects by providing a non-coherent reception method of sequences of information symbols, as disclosed in the claims.

According to the method of the invention the analytical expression for the calculation of the branch metrics is obtained starting from the known expression for the maximum likelihood sequence estimation of the non-coherent receiver. To this purpose, the function to be maximized is interpreted like a sequence general metric that can be obtained updating in a recurrent way a sequence partial metric defined at the n-th signal interval and in its turn calculated through the accumulation of incremental metrics of unlimited memory. In the calculation of incremental metrics a truncation at N-1 symbols preceding the actual one enables the construction of a trellis which the Viterbi algorithm can be applied to for searching the maximum path metric without significantly increasing the information loss.

A non-coherent receiver realized according to the method of the present invention is suitable to process linear modulated signals, also affected by intersymbol interference or CPM modulated signals, always giving performances higher than the whole conventional non-coherent receivers.

Like the conventional N-differential receivers, also the receiver implemented according to the present invention contains a phase reconstruction memory, or a comparable one, whose length N can be selected in order to obtain a satisfactory compromise between complexity and performance. In fact, as N increases, the performance comes closer to that of the optimum coherent receiver (which perfectly knows the synchronism and can be implemented in practice only in an approximate way through a pseudocoherent receiver), but at the same time increases also the complexity expressed by the number of states of the trellis diagram. However, it is possible to obtain, with not too high N values, a small complexity and performance very close to the optimum. When the phase reconstruction memory of the subject receiver assumes a value equal to the length of a block in the N-differential receiver of the known art, or to the observation interval in the receiver described in the essay of D. Raphaeli of February 1996, the considered receiver shows higher performances, because it employs a more effective expression of the branch metric, that is better compatible with the subsequent processing steps of the Viterbi algorithm and with the theoretical assumption on which said algorithm bases.

Brief Description of the Drawings

Additional purposes and advantages of the present invention will result more clear from the following detailed description of an implementation of the same and from the attached drawings given as non-limiting example, where:

- **fig.1** shows an equivalent model in base band of a generic digital communication system including a RIC receiver implementing the method of the present invention;

- **fig.2** shows a block diagram valid to describe the operation of the RIC receiver of fig.1 in the case of linear modulations;
- **fig.3** shows a block diagram valid to describe the operation of the METRICTOT block of fig.2;
- **fig.4** shows the implementation of the coding block COD of fig.1, in case it represents a convolutional coder for multilayer symbols of the M-PSK type;
- **figures 5** and **6** represent two different implementations of the coding block COD of fig.1 for two different code typologies, and
- **fig.7** shows a block diagram valid to describe the operation of the receiver in case of CPM (Continuous Phase Modulation) is used.

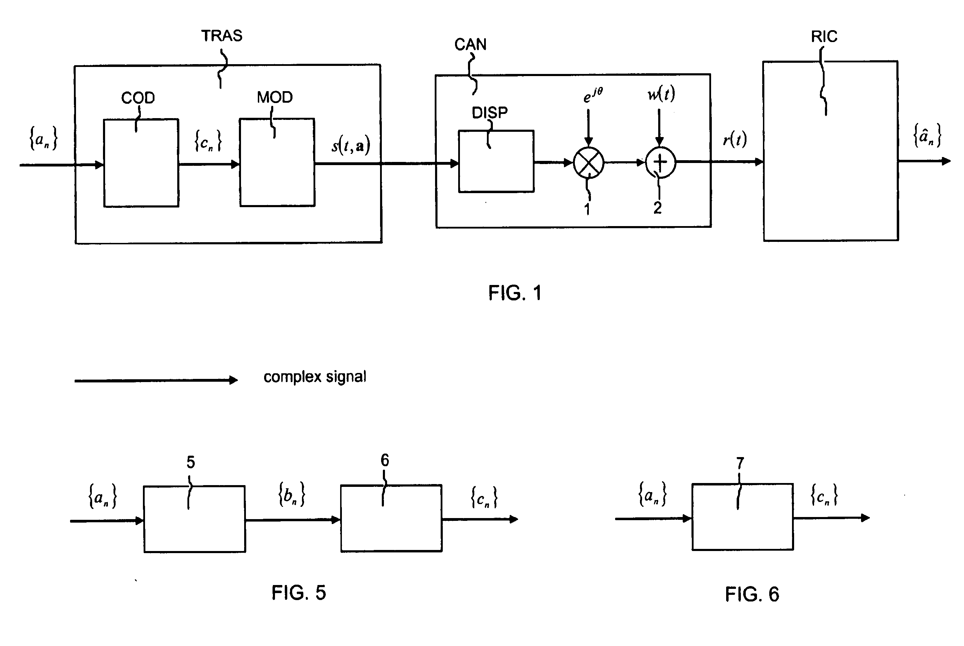

Making reference to fig.1, it can be noticed a transmitter TRAS connected to a receiver RIC through a communication channel CAN, that in the more general case dealt with in the present invention, is considered ideal and affected by AWGN noise with power spectrum density $N_o/2$. In less general cases the channel is considered dispersive. In fig.1 the channel CAN is modelled by the cascade of a DISP block, a multiplier 1, and an adder 2. At 1/T time intervals the input of the transmitter TRAS is reached by digital information symbols belonging to a cardinal alphabet M'. The symbols, assumed to be equiprobable and independent, form a sequence a = $\{a_n\}$ reaching the input of a coder COD which, through some coding rule, generates at output a sequence of coded symbols, c = $\{c_n\}$, in general complex and belonging to an alphabet with M ≥ M' cardinality. Notice that being the block diagram of fig.1 an equivalent in base band of the communication system, the signals are appearing as actually complex envelopes. The coded sequence $\{c_n\}$ reaches the input of a linear modulator MOD, mapping the sequence in a continuous time signal $s(t, \boldsymbol{a})$. This signal shall depend of course on the sequence of information symbols briefly indicated by vector a. The transmission signal s($t, \boldsymbol{a}$) coming out from the modulator MOD crosses the transmission means used by the communication channel CAN and reaches a non-coherent receiver RIC. It receives at its input a signal $r(t),$ and gives at the output an estimate $\{â_n\}$ of the transmitted information sequence ($a_n$). During the channel crossing the pulses of the transmission signal s($t, \boldsymbol{a}$) undergo, in general, a distortion and a global phase rotation θ. The DISP block is equivalent to a filter introduced in the diagram to consider the time dispersion underwent by pulses, while the multiplier 1, to the second input of which a phasor $e^{j\theta}$ is applied, considers the above mentioned phase rotation. Finally, the adder 2 adds to the transmission signal coming out from the multiplier 1 the complex envelope $w(t)$ of the noise present on the channel.

For what said above, the received signal $r(t)$ assumes the following expression:

$$r(t) = s'(t,\mathrm{a})e^{j\vartheta} + w(t) \qquad\qquad (1)$$

where: the phase rotation θ is assumed as constant for the whole transmission time and modelled as uncertain variable with uniform distribution in the interval [0,2π], and $s'(t, \mathbf{a})$ denotes the response of filter DISP to signal $s(t, \mathbf{a})$.

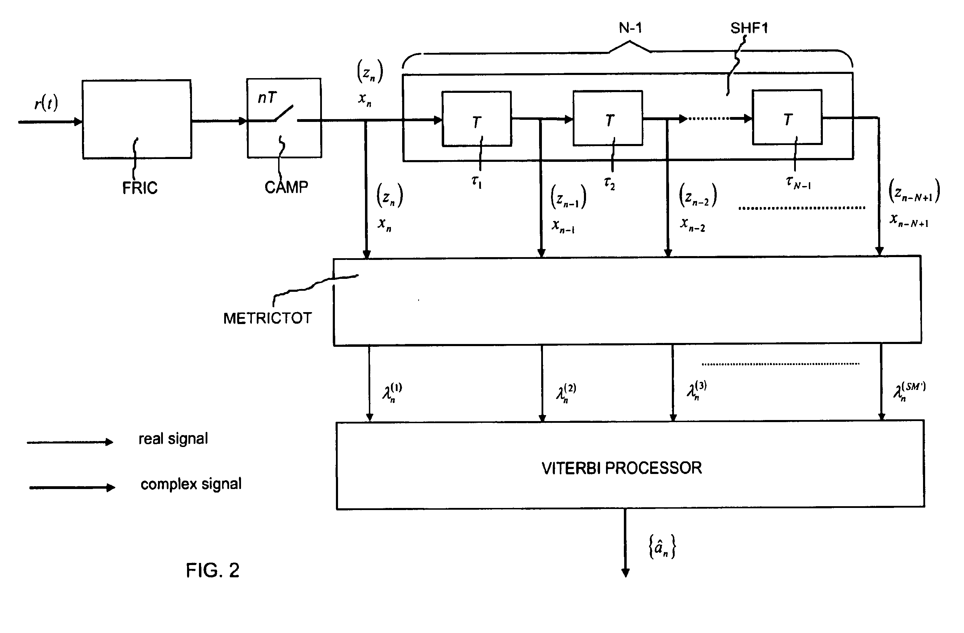

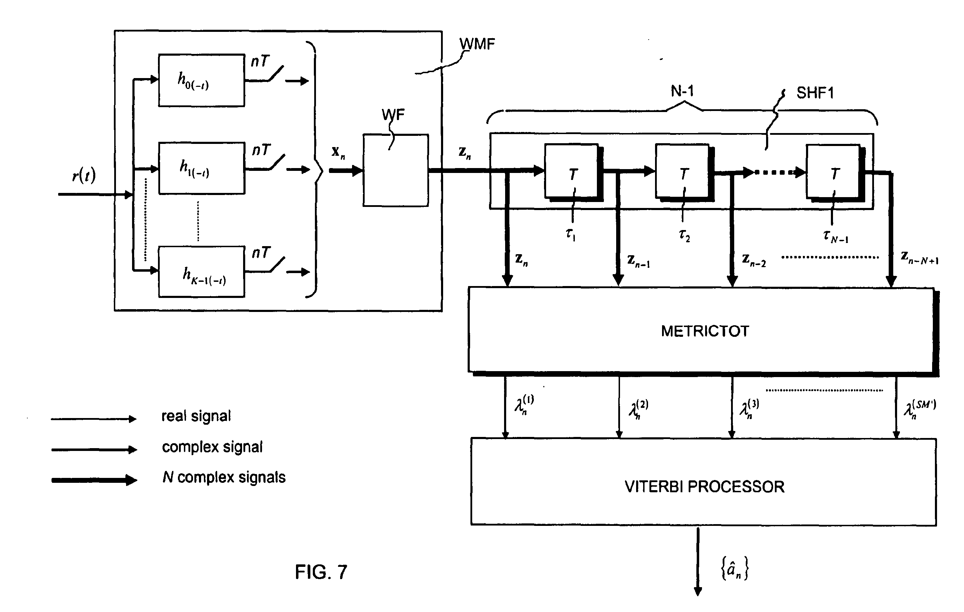

The schematisation of fig.1 is purposely generic, since its sole purpose is to introduce the basic elements of the channel upstream the receiver RIC, where the invention actually resides. Time by time, according to the particular receiver considered, the typologies of COD and MOD blocks shall be specified, as well as the actual characteristics of the channel CAN. Without detriment to the general character of the invention, we shall firstly describe a **first embodiment** of the reception method for linear modulations $M$-PSK and $M$-QAM of signals transmitted on an ideal channel, that is without DISP block. Afterwards, we shall depict a **second embodiment** of the reception method for linear modulations $M$-PSK and $M$-QAM of signals transmitted on a channel considered dispersive, and finally a **third embodiment** of the reception method for non-linear modulations of the CPM type. The structure of the receiver RIC shown in fig. 2 is only valid for the first two embodiments of the method; of course, the content of some blocks will change. We have neglected in the figures those blocks not considered absolutely necessary to the understanding the operation of the receiver. Fig. 7 shows the structure of the receiver RIC valid for the CPM modulation of the third embodiment.

**1st EMBODIMENT**

Making reference to fig.2, we shall now describe the receiver RIC valid for the first embodiment of the invention in presence of linear modulations and channel supposed as ideal. The signal $s(t, \mathbf{a})$ will assume the following expression:

$$s(t,\mathbf{a}) = \sum_i c_i h(t - iT) \qquad\qquad (2)$$

where T is the symbol interval and $h(t)$ is the transmitted pulse duly normalized.

In the assumption to perfectly know the symbol synchronism and the carrier frequency, the signal $r(t)$ can then be expressed as follows:

$$r(t) = \sum_i c_i h(t - iT)e^{j\vartheta} + w(t) \tag{3}$$

This signal reaches the input of a reception filter FRIC, a sampler CAMP is placed downstream, withdrawing the samples $x_n$ with cadence equal to the symbol frequency $1/T$. The samples $x_n$ form a sequence $\{x_n\}$ sent to a chain of $N$ - 1 delay elements $\tau_1$, $\tau_2$,..., $\tau_{N-1}$ of a symbol interval $T$. These elements $\tau$ are the flip-flops of a shift register SHF1 storing a string of $N$ -1 said samples of the filtered signal for the duration of a symbol, making them at the same time available at the output of each single flip-flop $\tau$. The sample $x_n$ and the $N$ -1 preceding samples $x_{n-1}$, $x_{n-2}$ ,..., $x_{n-N+1}$ are sent to a METRICTOT block performing, in correspondence, the calculation of appropriate expressions called «transition metrics», or «branch metrics», indicated in the figure with $\lambda_n^{(1)}$ , $\lambda_n^{(2)})$ , $\lambda_n^{(3)}$ ,..., $\lambda_n(SM')$. Said branch metrics reach the inputs of a block called Viterbi Processor, known to the skilled in the art, giving at output the estimated sequence $\{â_n\}$. How this takes place in presence of a signal $r(t)$ given by the (3) where $c_i$ , symbols appear, shall be explained describing some actual coding cases. Notice in the figure, that complex quantities are indicated with line arrows thicker than those used for real quantities.

The FRIC filter is matched to the real pulse transmitted $h(t)$, of known trend, is a filter with response to pulse $h(-t)$. In general an impulse $h(t)$ is used for which the pulse coming out from the adapted filter meets the Nyquist condition of intersymbol interference absence, that is such that:

$$\int_{-\infty}^{\infty} h(t - iT)h(t - kT)dt = \begin{cases} 1 & \text{for } k = i \\ 0 & \text{otherwise} \end{cases} \tag{4}$$

The selection of a FRIC filter with root raised cosine frequency response, likewise the transmission filter FTRAS, involves an optimum filtering during receipt and the matching of the (4). Therefore samples $x_n$ can be expressed as:

$$x_n = r(t) \otimes h(-t)\big|_{t=nT} \tag{5}$$

where the symbol $\otimes$ represents the convolution operator, and recalling the (3) and (4):

$$x_n = c_n e^{j\theta} + \eta_n \tag{6}$$

having indicated with:

$$\eta_n = \int_{-\infty}^{\infty} w(t)h(t - nT)dt \tag{7}$$

the noise samples filtered by the FRIC filter. Samples $x_n$ represent a sufficient statistic (that is their sequence includes the whole information associated to the corresponding continuous signal), and shall be indicated hereafter by the term «observable».

Concerning the operation of the RIC receiver of fig.2, it is only necessary to describe the nature of the METRICTOT block, since the implementation of the Viterbi Processor block is known to the skilled in the art, saying first that the algorithm there developed searches the path according to maximum accumulated metric on a sequential diagram, called also trellis, having S states represented as many nodes on a line perpendicular to the axis of time and identically repeating it at each symbol time, where M' branches start from each node and reach as many successive nodes, each branch being characterized by its own metric, representing the probability associated to the occurrence of the specific transition among subsequent states of the trellis. Useful terminology related to the Viterbi algorithm is the following:

- branch metric and transition metric are synonyms explained just above;

- path on the trellis is a sequence of branches starting from a node and terminating in another node generally more symbol time apart;
- a path metric value is achieved summing up branch metric values along a path;
- cumulative metric is synonym of path metric.

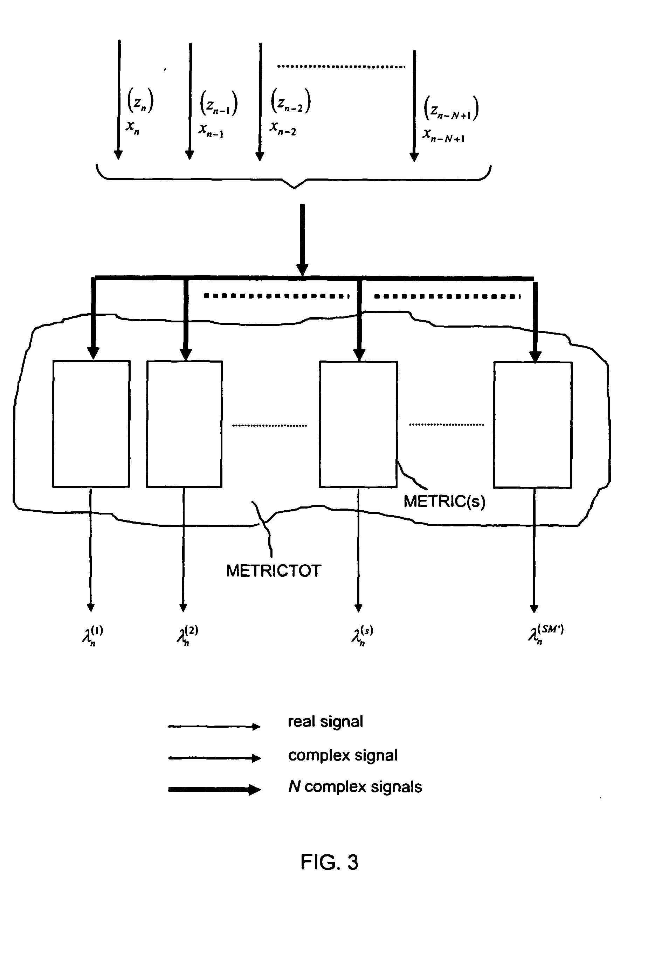

The structure of the METRICTOT block is better detailed in fig.3, where SM' identical blocks METRIC(s) at N inputs for samples $x_{n-1}$, $x_{n-2}$ ,..., $x_{n-N+1}$ can be noticed and, at an output for a relevant branch metric $\lambda_n^{(s)}$. The single METRIC(s) blocks work all in parallel and differ only for the content of storage internal elements containing the coded symbols $\widetilde{c}_n$, $\widetilde{c}_{n-1}$, $\widetilde{c}_{n-N+1}$ univocally associated to the particular branch of the trellis of which the relevant METRIC(s) block calculated the metric $\lambda_n(s)$. Concerning the particular coding of information symbols $\{\alpha_n\}$ in coded symbols $\{c_n\}$ the maximum general character has been maintained up to now.

For the following description it is convenient to better detail the (7) as follows:

$$s(t,\mathbf{a}) = \sum_{n=0}^{N_T-1} c_n h(t - nT) \tag{8}$$

where $N_T$ indicates the total number of code transmitted symbols. The analytical expression for the calculation of metrics $\lambda_n$ is obtained starting from the following known analytical expression of the sequence transmitted $\hat{\mathbf{a}}$ estimated at the maximum likelihood by the non-coherent receiver:

$$\hat{\mathbf{a}} = \arg\max_{\widetilde{a}}\left\{-\frac{1}{2N_0}\int_{T_0}\left|s(t,\widetilde{\mathbf{a}})\right|^2 dt + \log I_0\left(\frac{1}{N_0}\left|\int_{T_0} r(t)s^*(t,\widetilde{\mathbf{a}})dt\right|\right)\right\} \tag{9}$$

where $I_0(x)$ is the modified Bessel function of the first type and of order zero, $T_0$ is the observation interval, $N_0$ is the noise one-side power spectral density, and $\widetilde{\mathbf{a}}$ is a generic sequence of information symbols. Such an expression for the sequence $\hat{\mathbf{a}}$ estimation is described, for instance, in Appendix 4C of the volume "DIGITAL COMMUNICATIONS", author J. Proakis, published by McGraw-Hill, New York, 2nd ed., 1989. Replacing the (8) in the (9) and assuming an observation interval $T_0$ long enough, with simple algebraic passages the (9) becomes:

$$\hat{\mathbf{a}} = \arg\max_{\widetilde{a}}\left\{-\frac{1}{2N_0}\sum_{n=0}^{N_T-1}\left|\widetilde{c}_n\right|^2 + \log I_0\left(\frac{1}{N_0}\left|\sum_{n=0}^{N_T-1} x_n\widetilde{c}_n^*\right|\right)\right\} \tag{10}$$

where $\{\widetilde{c}_n\}$ is the code sequence univocally associated to the hypothetical sequence of information symbols $\widetilde{\mathbf{a}}$ according to the specified coding rule, and $x_n$ is the output sampled at instant $t = nT$ of a matched filter, as defined in the (5). The (10) can be approximated assuming $\log I_0(x) \cong x$; the quality of the approximation at equal $N_0$ is as better as $N_T$ is larger.

More in general, let's first consider the modulations where the pulses of the modulated signal have different power among them, like in the case $M$-QAM, and starting from the (10) define a sequence general metric like:

$$\Lambda_{N_T}(\widetilde{\mathbf{a}}) = -\frac{1}{2}\sum_{n=0}^{N_T-1}\left|\widetilde{c}_n\right|^2 + \left(\left|\sum_{n=0}^{N_T-1} x_n\widetilde{c}_n^*\right|\right) \tag{11}$$

which can be obtained through recurrent updating of a sequence partial metric defined coinciding with the $n$-th signalling interval like:

$$\Lambda_n(\widetilde{\mathbf{a}}) = -\frac{1}{2}\sum_{k=0}^{n-1}\left|\widetilde{c}_k\right|^2 + \left(\left|\sum_{k=0}^{n-1} x_k\widetilde{c}_k^*\right|\right) \tag{12}$$

the (12) being in its turn possible to be obtained as accumulation of incremental metrics $\Delta_n(\tilde{\mathbf{a}})$:

$$\Lambda_n(\tilde{\mathbf{a}}) = \sum_{k=-n}^{n} \Delta_k(\tilde{\mathbf{a}}) \tag{13}$$

the incremental metric $\Delta_n(\tilde{\mathbf{a}})$:can therefore be calculated from the (12):

$$\Delta_n(\tilde{\mathbf{a}}) = \Lambda_{n+1}(\tilde{\mathbf{a}}) - \Lambda_n(\tilde{\mathbf{a}}) = \left| \sum_{k=0}^{n} x_k \tilde{c}_k^* \right| - \left| \sum_{k=0}^{n-1} x_k \tilde{c}_k^* \right| - \frac{1}{2} |\tilde{c}_n|^2. \tag{14}$$

The difficulty in the calculation of the incremental metric (14) is a consequence of the non-limited memory necessary to express it. Said metric depends in fact on the whole previous coded sequence, and the maximization of the sequence general metric would necessarily involve a research on a duly defined tree diagram. This search is reasonably feasible only when the length of the sequence transmitted consists of a few symbols, in the contrary instance the exponential growth of the number of the tree branches at each new symbol transmitted would quickly render this research unlikely to be proposed. The inconvenient just highlighted is avoided through a suitable limitation of the memory of the incremental metric which, at the expenses of a negligible information loss enables to maximize the sequence general metric performing a research on a trellis diagram rather than on a tree diagram.

The deriving advantage is significant since in the case of research on a trellis the number of branches remains constant at each symbol interval n-th, contrarily to what happens on a tree, then the known Viterbi algorithm is well applicable.

To limit the memory of the incremental metric, a truncation is introduced in the (14) such that only the most recent $N$ observable $x_k$ are considered, being $N \ll N_T$, and the corresponding code symbols $\tilde{c}_k$. After the starting transient state, that is, for $n \geq N - 1$, the resulting branch metrics, obtained from the expression (14) through memory truncation, will be:

$$\lambda_n = \left| \sum_{i=0}^{N-1} x_{n-i} \tilde{c}_{n-i}^* \right| - \left| \sum_{i=1}^{N-1} x_{n-i} \tilde{c}_{n-i}^* \right| - \frac{1}{2} |\tilde{c}_n|^2. \tag{15}$$

It is necessary to provide in the receiver a memory of $N$ positions for a same number of samples $x_n$, the above mentioned memory corresponds to the shift register SHF1 of fig.2.

Notice that the approximation $\log I_0(x) \cong x$ could be avoided. In this case the following branch metrics would be obtained:

$$\lambda_n' = \log I_0 \left( \frac{1}{N_0} \left| \sum_{i=0}^{N-1} x_{n-i} \tilde{c}_{n-i}^* \right| \right) - \log I_0 \left( \frac{1}{N_0} \left| \sum_{i=1}^{N-1} x_{n-i} \tilde{c}_{n-i}^* \right| \right) - \frac{1}{2 N_0} |\tilde{c}_n|^2 \tag{16}$$

depending of course on the signal-to-noise ratio. Even if the $\log I_0(x) \cong x$ approximation is not present in the (16), the receivers based on it do not necessarily give performances better than those of the receivers based on metrics (15). In fact the effect of the truncation on the most recent symbols can be different in the two cases. It has been verified that the receivers based on metric (16) have performances equivalent to those of the receivers based on metrics (15) in all the following cases summarized below:

A) $M$-PSK modulated signals transmitted together with pilot symbols as an alternative to differential coding.

B) $M$-PSK modulation and differential coding ($M$-DPSK). A sub-case for maximum likelihood sequence estimation with complexity reduction.

C) $M$-PSK modulation and channel convolutional coding.

D) *M*-QAM modulation and quadrant differential coding (*M*-DQAM).

In case A), B), and C) the symbols $\{c_n\}$ belong to the *M*-PSK alphabet, therefore the generic symbol transmitted can be expressed as $c_n = e^{j\phi n}$, where $\phi_n \in \left\{ \dfrac{2\pi m}{M}; \; m = 0, 1, ..., M - 1 \right\}$, with M cardinality of the alphabet. Reconsidering the (10) we see that the approximation $\log I_0(x) \cong x$ is no more necessary since the first term can be omitted, being constant for all the sequences, and the function $\log I_0(x)$ is growing monotone for $x \geq 0$ In this case therefore, the sequence general metric becomes:

$$\hat{\mathbf{a}} = \arg \max_{\tilde{a}} \left| \sum_{n=0}^{N_T-1} x_n \tilde{c}_n^* \right| \tag{17}$$

and the relevant expression of the branch metric can be obtained operating as done for the (15), with the difference that now versus the (15) the last term will be absent and the sole approximation in the calculation shall be due to the truncation, resulting in excess the one given by $\log I_0(x) \cong x$. Considering the fact that the function $y = x^2$ is growing monotone for $x \geq 0$, a sequence general metric equivalent to the (17) results being:

$$\left| \sum_{n=0}^{N_T-1} x_n \tilde{c}_n^* \right|^2 = \sum_{n=0}^{N_T-1} \sum_{m=0}^{N_T-1} x_n x_m^* \tilde{c}_n^* \tilde{c}_m =$$
$$= \sum_{n=0}^{N_T-1} |x_n|^2 |\tilde{c}_n|^2 + 2 \operatorname{Re}\left\{ \sum_{n=1}^{N_T-1} x_n \tilde{c}_n^* \sum_{m=0}^{n-1} x_m^* \tilde{c}_m \right\}. \tag{18}$$

In this expression the sequence general metric is given by the sum of all the elements of a hermitiane matrix $N_T \times N_T$. The first summation appearing in the (18) is independent from the coded sequence, being $|\tilde{c}_n|^2$ Therefore an equivalent simplified expression of the metric (18) is:

$$\Lambda_{N_T}(\tilde{\mathbf{a}}) = \operatorname{Re}\left\{ \sum_{n=1}^{N_T-1} x_n \tilde{c}_n^* \sum_{m=0}^{n-1} x_m^* \tilde{c}_m \right\}. \tag{19}$$

Operating on the (19) through a procedure similar to the one that conducted to the (15), we can define, by $n \geq N - 1$, the expression of a truncation incremental metric, which can be used to calculate the following branch metrics:

$$\lambda_n = \operatorname{Re}\left\{ x_n \tilde{c}_n^* \sum_{m=n-N+1}^{n-1} x_m^* \tilde{c}_m \right\} = \operatorname{Re}\left\{ \sum_{i=1}^{N-1} x_n x_{n-i}^* \tilde{c}_n^* \tilde{c}_{n-i}^* \right\} \tag{20}$$

The (15) and (20) enable the maximization of the sequence general metric recurrently operating through the Viterbi algorithm on a trellis whose branch metrics are in fact the (15) or its simplification (20). The coded symbols $\{c_n\}$ can be expressed according to the information symbols $\{\alpha_n\}$ and the trellis state can be defined according to the latter, thus avoiding the additional decoding. The (15) and (20) depend on $N$ code symbols, in general, the number of states of the trellis of the symbols is higher than the number of states of the code trellis. However, this complexity increase can be limited taking appropriate complexity reduction techniques, in order to limit the number of states without excessively reduce the value of $N$. In practice, it was possible to obtain a performance very close to that possible to obtain in case of ideal coherent detection (that is in the case the phase $\theta$ is perfectly known) of the phase, though using $N$ values of some units. This is a concrete demonstration of the scarce significance of the loss of information due to the cutting at $N$ symbols the memory length for the calculation of the branch metrics. A possible explanation of the results obtained is that the main information to the purposes of the sequence estimation results concentrated in the most recent symbols.

**Case A)** - In the introduction we said that non-coherent receivers presuppose the use of a differential coding during transmission, due to the practical difficulty in the recovery of an absolute phase recovery. However, this statement is not binding since, as it is known, as an alternative to the differential coding, the above mentioned recovery can be made through periodical introduction of one or more pilot symbols known to the receiver in the information symbol sequence transmitted, every P of said symbols. In the receiver of case A) symbols $c_n$ shall be intended as information symbols $a_n$ belonging to the $M$-PSK alphabet so that the (20) is valid at once. The state of the trellis is defined as:

$$\sigma_n = \left(\widetilde{c}_{n-1}, \widetilde{c}_{n-2}, ..., \widetilde{c}_{n-N+1}\right) \qquad (21)$$

and the number of states is $S = M^{N-1}$, and therefore it exponentially increases with the phase construction memory. If at the instant $n$ a pilot symbol is received, for instance $\chi$, the states compatible with the same are all of the type:

$$\sigma_n = \left(\chi, \widetilde{c}_{n-2}, ..., \widetilde{c}_{n-N+1}\right) \qquad (22)$$

that is only one fraction $1/M$ of total states. In this case the Viterbi processor maintains only a fraction of the paths survived in the trellis, namely, only the survivors leading to the states (21) compatible with the known pilot symbol. From the realization point of view, when the pilot symbol is received, the cumulative metrics of survived paths that shall be eliminated, can be decreased of an appropriate quantity causing that all the considered paths, generated by said survivors, loose all the subsequent comparisons. In conclusion, the receiver of case A) exploits its knowledge in advance, that is the fact to know that at a given instant k the symbol $c_n = \chi$ could not be transmitted, to avoid to have survivors ending in states not compatible with the known pilot symbol, and therefore reduce the possibility to decide for a wrong sequence.

**Case B)** - The symbols $\{c_n\}$ are derived from information symbols $\{\alpha_n\}$, belonging to the same alphabet, through the differential coding rule $c_n = c_{n-1}\alpha_n$. Applying such a coding the branch metric (15) becomes:

$$\lambda_n = \left| \sum_{i=0}^{N-1} x_{n-i} \prod_{m=0}^{i-1} \widetilde{a}_{n-m}^{\bullet} \right| - \left| \sum_{i=1}^{N-1} x_{n-i} \prod_{m=0}^{i-1} \widetilde{a}_{n-m}^{\bullet} \right| \qquad (23)$$

having expressed the coded symbols $\{c_n\}$ as function of symbols $\{a_n\}$. From the (23) we can notice how in the metric $\lambda_n$ the coded symbols $\widetilde{c}_n$ do no more appear, therefore it is the Viterbi processor itself that without any modification in its operation mode, accomplishes also the differential, according to what shown in fig.2. To obtain this we see that the state $\sigma_n$ of the trellis used by the Viterbi processor must be defined on information symbols as:

$$\sigma_n = \left(\widetilde{a}_{n-1}, \widetilde{a}_{n-2}, ..., \widetilde{a}_{n-N+2}\right) \qquad (24)$$

The number of states is $S = M^{N-2}$, whose exponential growth with $N$ can be reasonably confined using small $N$ values, because we observed that some performances can however be obtained, expressed through the BER, very close to those of a coherent receiver for signals with differential coding.

As **sub-case B)** it is described a non-coherent receiver with expression of the branch metric differing from the (23) due to the fact that the maximum likelihood sequence estimation takes place according to a simplified method. Techniques are known in the invention application field enabling to reduce the number of states of the trellis on which the Viterbi processor operates. Generally, once the length of the phase reconstruction memory is determined, a given number of information symbols will appear in the definition of the deriving state; now, using the above mentioned known complexity reduction techniques it is possible to define a reduced trellis where the state is tied to a lower number of information symbols, for instance neglecting the more remote symbols, or making a partitioning of the symbol set (set partitioning). The above mentioned techniques are, for example, described in the following articles:

- «Reduced-State Sequence Estimation (RSSE), with set partitioning and decision feedback», authors: M. V. Eyuboglu, S. U. H. Qureshi, published on IEEE Trans. Commun. , vol. 36, pp.13-20, January 1988;
- «Decoding of trellis-encoded signals in the presence of intersymbol interference and noise», authors: P.R. Chevillat and E. Eleftheriou, published on IEEE Trans. Commun., vol. 43, pp.354-364, July 1989.

The reduced complexity technique applied in the receiver of the present sub-case B) is of the RSSE type (Reduced State Sequence Estimation'). The "reduced" state is defined as $\sigma_n^{\cdot} = \left( \tilde{a}_{n-1}, \tilde{a}_{n-2}, ..., \tilde{a}_{n-Q+2} \right),$ being the integer $Q \leq N$. In this way the number of states of the trellis diagram becomes $S=M^{Q-2}$.

The performance of the non-coherent receiver of case B), and relevant sub-case, have been evaluated for a 4-DPSK modulation from DQPSK (Differential Quaternary PSK). Variable lengths of the phase reconstruction memory have been considered and therefore, different complexity levels of the trellis. The receiver according to the present invention has higher performance, at equal $N$ value, compared to the $N$-differential receiver described in the article by Divsalar and M. K. Simon of March 1990. For $N = 2$ both the receivers degenerate in the classical differential receiver, so their performances coincide. It was also checked that the performance of the receiver considered tend, as $N$ increases, to those of a coherent receiver of the DQPSK type, with a rapidity not depending on the signal-to-noise ratio. This demonstrates that not only asymptotically, for high signal-to-noise ratios, but in general for each value of this ratio, the performance of a coherent receiver can be approximated as desired, provided that a sufficiently high $N$ value is chosen. This is true also when the complexity is appropriately reduced. For instance, it results that with a not excessive complexity (reduced to 16 states) the performance decrease is rather limited versus the coherent receiver (0,2 dB at a BER of $10^{-4}$). Therefore the receiver scope of the present invention, in the application referred to case B) is characterized by an insignificant loss compared to a coherent receiver, loss that in some applications can be lower than that due to an inaccurate estimation of the phase in the approximation of a coherent system through a pseudocoherent receiver.

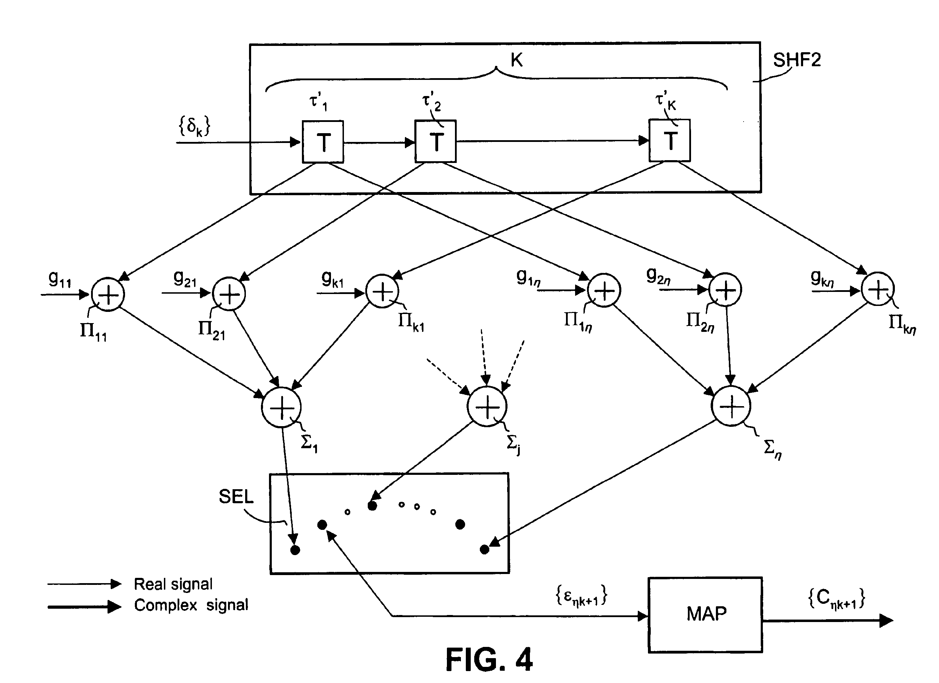

**Case C)** - It is now examined the case C) that concerns a non-coherent sequence estimation receiver for signals with $M$-PSK modulation and channel convolutional coding. The following considerations are applicable to any type of channel coding, for instance to the TCM coding. To the purpose of better facilitate the comprehension of the structure and the operation of the receiver relevant to the case C), making reference to fig.4, it is first shown a convolutional coder used in the transmitter TRAS of fig.1 for the case considered. The structure of the coder is that described in the paper by D. Raphaeli of February 1996 mentioned above. At the input of the coder shown in the figure, one can notice a sequence of information symbols $\{\delta_n\}$, with $1/T$ cadence, belonging to an alphabet $A = \{0, 1,..., M\text{-}1\}$. The sequence $\{\delta_n\}$ is sent to a chain of $K$ delay elements $\tau_1, \tau_2, ..., \tau'_N$ of a symbol interval $T$. These elements $\tau'$ are the flip-flops of a shift register SHF2 storing a string of $K$ said symbols for the whole duration of the symbol, making them available at the same time at the output of each single flip-flop $\tau'$. Each sample $\delta_k$ coming out from a relevant flip-flop $\tau'$ simultaneously reaches a first input of $\eta$ multipliers $\Pi_{ij}$ ; at the second input of said multipliers arrive the relevant constants $g_{ij} \in A$. From the above, the total number of multipliers $\Pi_{ij}$ will result $K\eta$, organized in $\eta$ groups of $K$ multipliers each. Indexes $i$ and $j$ placed as deponent of elements $\Pi_{ij}$ and $g_{ij}$ indicate respectively the element $i$ within the group of $K$ elements, and a particular group $j$ within the assembly of $\eta$ groups. The outputs of the $K$ multipliers $\Pi_{ij}$, within each group $j$, reach the $K$ inputs of a relevant adder $\Sigma_j$, module $M$. Each output of the $\eta$ adders $\Sigma_j$ reaches a relevant input of a selector SEL which, with cadence equal to $\eta$ times the symbol frequency $1/T$ , cyclically withdraws a sample at the selected input and sends it to a mapping block MAP. The samples coming out from the selector SEL form a sequence $\{\varepsilon_{\eta k+1}\} \in A$ (l = 0, 1,..., $\eta$-1), which is mapped at the output by MAP in a corresponding complex sequence $\{c_{\eta k+1}\}$ of the $M$-PSK alphabet, as indicated in figure by the different thickness of the arrows. The notation used herein foresees that the index $k$ represents a time instant (discrete) synchronous with the information sequence and the index $l$ defines each one of the $\eta$ coded symbols associated to each information symbol.

As for the operation of the coder in fig.4, the value $K$ represents the length of code limit, which is characterized by a number of states equal to $S_c = M^{K-1}$. The constants $g_{ij} \in A$, are organized in $\eta$ $K$-uple $\mathbf{g}_1 = (g_{11},...,g_{K1}) ... \mathbf{g}_\eta = (g_{1\eta},...,g_{K\eta})$, and form the code generators, having rate $1/\eta$. It is then possible to express the symbols $\varepsilon_{\eta k+1}$ coming out from the selector SEL as follows:

$$\varepsilon_{\eta k+l} = \sum_{m=1}^{K} g_{ml} \delta_{k-m} \qquad (25)$$

where the summation has to be intended "module $M$". The mapping operation is made by the MAP block through the following relation: $c_{\eta k+l} = e^{j\frac{2\pi}{M}\varepsilon_{\eta k+l}}$ . It is possible to define a relation between symbols $c_{\eta k+l}$ and the $a_n$ remembering that without the convolutional coding, the symbols $\delta_n$ should be mapped by the MAP block in symbols $a_n$ belonging to the $M$-PSK alphabet according to the relation: $a_n = e^{j\frac{2\pi}{M}\delta_k}$ . With adequate treatment of the previous expressions,

we obtain:

$$c_{\eta n+l} = \prod_{m=1}^{K} a_{n-m}^{g_{ml}} \qquad (26)$$

This assumed, the calculation of branch metrics concerning the receiver of the present case C) that employs the coder of fig.4, can be made starting from the expression (20) of the branch metric for the similar receiver *M*-PSK, without channel coding. In the case of the present convolutional coding, the index *n* in (20) can be replaced by $\eta_n + j$, where the new index *n* scans the information symbols, while the index *j* scans the $\eta$ coded symbols associated to the *n*-th information symbol. Also, the Viterbi algorithm operates on information symbols and therefore the contribution to the branch metrics relevant to the $\eta$ coded symbols corresponding to a same information symbol must be summed up. Consequently, the branch metrics (20) become:

$$\lambda_n = \mathrm{Re}\left\{ \sum_{i=1}^{L-1} \sum_{j=0}^{\eta-1} \sum_{l=0}^{\eta-1} x_{\eta n+j} x_{\eta(n-i)+l}^{*} \widetilde{c}_{\eta n+j}^{*} \widetilde{c}_{\eta(n-i)+l} \right\} \qquad (27)$$

where $L = N/\eta$ is assumed as integer. Using the (14) in (15) it is possible to express code symbols according to information symbols, obtaining:

$$\lambda_n = \mathrm{Re}\left\{ \sum_{i=1}^{L-1} \sum_{j=0}^{\eta-1} \sum_{l=0}^{\eta-1} x_{\eta n+j} x_{\eta(n-i)+l}^{*} \left( \prod_{m=1}^{K} \widetilde{a}_{n-m}^{g_{mj}} \right)^{*} \prod_{k=1}^{K} \widetilde{a}_{(n-i)-k}^{g_{kl}} \right\} \qquad (28)$$

which is the expression of a branch metric for the receiver considered, whose trellis has a number of states $S = S_c M^{-1}$, where $S_c = M^{K-1}$, and therefore $S = M^{+K-2}$, having implicitly considered the case not requiring the introduction of a differential coding before the channel coder: this position shall be clarified hereafter. In the contrary instance the number of states is $S = S_c M^{L-2}$ due to reasons similar to those expressed in the calculation of the number of states of the receiver *M*-DPSK of case B). Since the trellis results rather complex, it can be the case to apply the described complexity reduction techniques.

Using the (14) the branch metrics (15) can be expressed in an equivalent manner in the form:

$$\lambda_n = \left| \sum_{i=0}^{N/\eta-1} \sum_{l=0}^{\eta-1} x_{\eta(n-i)+l} \widetilde{c}_{\eta(n-i)+l}^{*} \right| - \left| \sum_{i=1}^{N/\eta-1} \sum_{l=0}^{\eta-1} x_{\eta(n-i)+l} \widetilde{c}_{\eta(n-i)+l}^{*} \right| \qquad 29)$$

where the indexes *n* and *i* run on information symbols, *l* scans the code symbols associated to the (*n* - *i*)-th information symbol, and $\dfrac{N}{\eta}$ is comparable to the length *L* of the phase reconstruction memory expressed in term of the information symbols. Similarly, the branch metric (20) is expressed as indicated in the (15).

Using the (14) in the (29) it is possible to express code symbols as function of information symbols, obtaining:

$$\lambda_n = \left| \sum_{i=0}^{N/\eta-1} \sum_{l=0}^{\eta-1} x_{\eta(n-i)+l} \left( \prod_{m=1}^{K} a_{n-i-m}^{g_{ml}} \right)^{*} \right| - \left| \sum_{i=1}^{N/\eta-1} \sum_{l=0}^{\eta-1} x_{\eta(n-i)+l} \left( \prod_{m=1}^{K} a_{n-i-m}^{g_{ml}} \right)^{*} \right| \qquad (30)$$

**Case D)** - Is referred to a modulation type characterized by pulses having different power, therefore the expression of the branch metric (20) can be used no more. The sole expression from which one shall start for the calculation of the branch metrics is the more general expression (15). In particular, the (16), (17), (18) and (19) continue to apply, we report for convenience:

$$a_n = \mu_n p_n \ (16); \qquad c_n = \mu_n q_n \ (17); \qquad q_n = p_n q_{n-1} \ (18);$$

$$\widetilde{q}_n^{\bullet} \widetilde{c}_{n-i} = \widetilde{\mu}_{n-i} \widetilde{q}_{n-i} \widetilde{q}_n^{\bullet} = \widetilde{\mu}_{n-i} \widetilde{p}_n^{\bullet} \prod_{m=1}^{i-1} \widetilde{p}_{n-m}^{\bullet} \tag{34}$$

Branch metrics (15) can be expressed according to the information symbols in such a way that the Viterbi algorithm performs also the differential decoding. Multiplying to the purpose the terms $\left| \sum_{i=0}^{N-1} x_{n-i}^{\bullet} \widetilde{c}_{n-i} \right|$ and $\left| \sum_{i=1}^{N-1} x_{n-i}^{\bullet} \widetilde{c}_{n-i} \right|$ of the

(15) by $\left| \widetilde{q}_n^{\bullet} \right| = 1$, , considering the (34) and the fact that the result is $|\widetilde{c}_n| = |\widetilde{\alpha}_n| = |\widetilde{\mu}_n|$, we obtain:

$$\lambda_n = \left| \sum_{i=0}^{N-1} x_{n-i}^{\bullet} \widetilde{\mu}_{n-i} \prod_{m=0}^{i-1} \widetilde{p}_{n-m}^{\bullet} \right| - \left| \sum_{i=1}^{N-1} x_{n-i}^{\bullet} \widetilde{\mu}_{n-i} \prod_{m=0}^{i-1} \widetilde{p}_{n-m}^{\bullet} \right| - \frac{1}{2} |\widetilde{a}_n|^2 \tag{35}$$

On the basis of the (35) the state of the trellis diagram can be defined as in the (24), and identical results the number of states and the applicable techniques to reduce the complexity.

Before considering the two other embodiments of the invention, making reference to figures 5 and 6 we shall now describe some known arguments concerning in general the channel codes expressed by the coder COD of fig.1; the purpose is that to determine the advantages for the receivers according to the invention, by comparison with conventional ones.

Two blocks 5 and 6 placed in cascade are shown in fig.5, which represent a particular implementation of the coder COD included in the transmitter TRAS of fig.1. The block 5 represents a differential coder, the input of which is reached by the sequence of information symbols $\mathbf{a} = \{a_n\}$, and a sequence of symbols $\mathbf{b} = \{b_n\}$ coded in differential mode is supplied at its output. The block 6 is a channel coder expressing a phase rotation invariant code of multiples of an angle $\phi$ sustained by vector $\mathbf{b}$ representing the sequence carrying the same name. At the output of block 6 the sequence $\mathbf{c} = \{c_n\}$ is present. Both the coders are of the known type. For the coder 6 the following property applies, that is described in the volume under the title "Introduction to trellis-coded modulation with applications", authors: E. Biglieri, D. Divsalar, P. J. McLane and M. K. Simon, published by Macmillan Publishing Company, 1991: if the coded sequence $\mathbf{c} = \{c_n\}$ corresponds to the sequence $\mathbf{b} = \{b_k\}$ of symbols at the input of the channel coder, the sequence ce$^{jn\phi}$, with any m, is still a code sequence and corresponds to an input sequence $\mathbf{b}$e$^{jm\phi}$. This code behaviour, without appropriate countermeasures, could result catastrophic for the receiver, since it would prevent the decoding of starting symbols. The countermeasures which make possible to use the same a code of this type, consist in placing a differential coding on information symbols before the channel coding, as shown in fig.5. In this case the sequences $\mathbf{b}$ and $\mathbf{b}$e$^{jm\phi}$ that are not discriminated by the decoder, are corresponding to a same information sequence $\mathbf{a} = \{a_n\}$ through a differential coding, and the problem is thus solved. This enables to see how the cascade of the two blocks 5 and 6 of fig.5 behaves as a unique coder relevant to a code globally **non-invariant to rotations**, corresponding to the unique block 7 of fig.6.

The implementation of the COD block of fig.1 according to the setting of fig.5 makes possible in the known art the use of a pseudocoherent receiver, which employs the metrics of the coherent receiver assuming as true the phase obtained making use of a PLL, because the reception is possible even if the PLL locks not to the true phase but to a phase differing from the same of a multiple of the angle $\phi$. In this case it is necessary to construct the trellis on the symbols $\{b_n\}$, except for the subsequent use of a differential decoder to obtain the decided symbols $\{a_n\}$. This double decoding passage can be avoided in the receivers of the subject invention. In fact, in presence of a rotation invariant code preceded by differential coding, the trellis is constructed not on the symbols $(b_n)$ but on information symbols $\{a_n\}$; in this way the Viterbi processor makes also the differential decoding.

An additional advantage that non-coherent receivers of the invention have, compared to the known art consisting of pseudocoherent receivers with PLL, is that to be able to freely use a channel code non invariant to phase rotations.

In fact, as for the particular known art considered, we have just seen that the coder structure shown in fig. 6 results binding, where the channel code is rotation invariant. On the other hand, a channel code non invariant to phase rotation (differently obtained from the cascade of blocks of fig.5) would not enable the pseudocoherent receiver to neutralize the phase ambiguity introduced by the PLL. To overcome this serious disadvantage, the solutions known consist in giving a phase absolute reference to the receiver, for instance, using the pilot symbols mentioned above during transmission.

The performance of the non-coherent receiver of the present case C has been compared to that of the receiver described in the article by D. Raphaeli of February 1996 mentioned above. The parameters selected to characterise both the receivers, foresaw the use of signals with QPSK modulation and convolutional coding, phase rotation not invariant, with $K$ = 3 and $\eta$ = 2 (and therefore $S_c$ = 16). The code generators used to this purpose were: $\mathbf{g}_1$ = (1, 3, 3) and $\mathbf{g}_2$ = (2, 3, 1). A phase reconstruction memory has been used in the receiver with $L$ = 4. From the comparison it resulted that the receiver of the present case C) gains 0,3 dB in performance on BER, for any value considered of the signal-to-noise ratio, compared to the receiver of the known art, and loses only 0,2 dB compared to the optimum coherent receiver.

## 2° EMBODIMENT

In presence of linear modulations It is now removed the hypothesis of absence of intersymbol interference on the received signal, which means to consider the filter DISP of fig. 1 present for modelling the transmission channel this time no more ideal. Consequently, the possibility to consider modulated pulses having equal power subsides, and the complex envelope $s(t, \mathbf{a})$ must be intended as coming out from the filter DISP. In the considered case of coded linear modulation, the signal $s(t,\mathbf{a})$ can be expressed in the form:

$$s(t,\mathbf{a}) = \sum_{n=0}^{N_T-1} c_n h(t - nT) \qquad (8)$$

but now the impulse $h(t)$ (known) considers also the dispersive filtering due to the transmission channel and therefore, does no more meet the Nyquist condition for the right reconstruction of the signal transmitted starting from its samples.

Defining $g_n \stackrel{\Delta}{=} g(nT),$ where $g(t) \stackrel{\Delta}{=} h(t) \otimes h^{\bullet}(-t),$ replacing the (8) in expression (9) of sequence $\hat{\mathbf{a}}$ estimated at the maximum likelihood by the non-coherent receiver, introducing the approximation $\log I_0(x) \cong x$ , and proceeding as previously done to obtain the (10), we obtain the following decision strategy:

$$\hat{\mathbf{a}} = \arg\max_{\tilde{\mathbf{a}}}\left\{ -\frac{1}{2}\sum_{k,=0}^{N_T-1}\sum_{n=0}^{N_T-1}\tilde{c}_k\tilde{c}_n^{\bullet}g_{n-k} + \left|\sum_{n=0}^{N_T-1}x_n\tilde{c}_n^{\bullet}\right| \right\}. \qquad (36)$$

As already made before, we indicated with $\{x_n\}$ the sample sequence at the output of the matched filter FRIC (fig.2), which sequence represents a statistic sufficient to decide according to the (36) the symbols of the transmitted sequence. The samples $\{x_n\}$ can be expressed as:

$$x_n = \sum_{l=-L}^{L} g_l c_{n-l} e^{j\theta} + n_n \qquad (37)$$

having indicated with $L$ the channel memory, being $2L + 1$ the number of non null samples of $g(t)$, and

$n_n \stackrel{\Delta}{=} n(nT)$ , where $n(t) \stackrel{\Delta}{=} w(t) \otimes h^{\bullet}(-t).$ The complex discrete uncertain process $n_n$ is Gaussian of course, null mean and coloured, with autocorrelation function $R_n(m) \overset{\Delta}{=} E\{n_n n_{n-m}^{\bullet}\} = 2N_0 g_m.$

An approach foreseeing the use of a matched filter in presence of ISI to obtain a sufficient statistic, though referred to coherent receivers, is described in the article by G. Ungerboeck, under the title «ADAPTIVE MAXIMUM-LIKELIHOOD RECEIVER FOR CARRIER-MODULATED DATA-TRANSMISSION SYSTEM», published on IEEE Trans. Commun., vol. 22, pp. 624-635, May 1974.

An alternative procedure, and a preferred one as we will see, enabling to obtain a statistic sufficient to decode according to the (36), employing a whitened matched filter FRIC (WMF, Whitened Matched Filter) (fig.2) to filter the signal received, is described in the article by G. D. Forney Jr., under the title «MAXIMUM-LIKELIHOOD SEQUENCE ESTIMATION OF DIGITAL SEQUENCES IN THE PRESENCE OF INTERSYMBOL INTERFERENCE», published on IEEE Inform. Theory, vol. 18, pp. 363-378, May 1972. It is understood that the teachings of the two above mentioned approaches do not injure the conception idea expressed in the (15), but must be considered complementary to the same in the case ISI is present.

As it is known, a whitening filter is a filter such that the noise at its output has a constant power spectral density. Its presence is justified by the fact that, due to the ISI, the signal received is affected by coloured noise, while the expressions for the maximum likelihood sequence estimation were subject to the white noise assumption. The implementation of said filter is known to the skilled in the art, once the response to the impulse $h(t)$ of the dispersive channel is known, and therefore of the impulse $g(t)$. The whitened matched FRIC filter of fig.2 is in practice realized through the cascade of a filter matched with a whitening filter, in this case the sequence of samples $z_n$ at output of such filter has been indicated with $\{z_n\}$. When the Forney approach shall be considered, these last shall replace the samples $x_n$ in figures 2 and 3.

The samples $z_n$ can be expressed as:

$$z_n = y_n e^{j\theta} + w_n \qquad\qquad (38)$$

where uncertain variables $\{w_n\}$ are Gaussian, null mean, independent and with variance $\sigma_w^2 = 2N_0$ and:

$$y_n \overset{\Delta}{=} \sum_{l=0}^{L} f_l c_{n-l} \qquad\qquad (39)$$

where $\{f_n\}$ is the discrete time impulse response of the dispersion channel, obtained from the sequence $\{g_n\}$ through the whitening filtering, mentioned before. It is possible to obtain in the known way an alternative formulation of the strategy of the non-coherent optimum receiver based on the sample sequence $\{z_n\}$, indicated hereinafter also with the vector z. To this purpose, starting from the density of probability $p(\mathbf{z}|\widetilde{\mathbf{a}},\theta)$ and making the mean in respect to $\widetilde{\theta}$, we obtain the likelihood function $p(\mathbf{z}|\widetilde{\mathbf{a}})$ for the non-coherent optimum decision.

Using again the approximation log $I_0(x) \cong x$, the decision strategy becomes:

$$\hat{\mathbf{a}} = \arg\max_{\widetilde{\mathbf{a}}}\left\{ -\frac{1}{2}\sum_{n=0}^{N_T-1}|\widetilde{y}_n|^2 + \left|\sum_{n=0}^{N_T-1} z_n \widetilde{y}_n^{\bullet}\right| \right\} \qquad\qquad (40)$$

where $\widetilde{y}_n$ is defined according to $\widetilde{c}_n$ similarly to the (39).

We shall now describe the approaches that enable to obtain branch metrics concerning the two decision strategies (36) and (40), alternative between them. The intent is to use the Viterbi algorithm to evaluate the above mentioned expressions. The approaches foresee the introduction of appropriate approximations, in an almost similar way, as previously done starting from the (10). Out of the two approaches, the one referring to strategy (36) (Ungerboeck) shall be developed, a similar procedure enables to obtain the expression of the branch metric even in the more profitable case of the strategy (40) (Forney).

First of all, let's define the following sequence partial metric:

$$\Lambda_n(\widetilde{\mathbf{a}}) \overset{\Delta}{=} \left| \sum_{k=0}^{n-1} x_k \widetilde{c}_k^* \right| - \frac{1}{2} \sum_{k=0}^{n-1} \sum_{n=0}^{n-1} \widetilde{c}_k \widetilde{c}_n^* g_{n-k}$$

$$= \left| \sum_{k=0}^{n-1} x_k \widetilde{c}_k^* \right| - \frac{1}{2} \sum_{k=0}^{n-1} \left\{ |\widetilde{c}_k|^2 g_0 + 2\,\mathrm{Re}\left[ \sum_{l=1}^{\min(L,k)} \widetilde{c}_k \widetilde{c}_{k-l}^* g_l \right] \right\} \qquad (41)$$

where the property $g_n = g_{-n}^*$, has been used. After an initial transient, that is, for $n \geq L$, we can define the following incremental metric:

$$\Delta_n(\widetilde{\mathbf{a}}) \overset{\Delta}{=} \Lambda_{n+1}(\widetilde{\mathbf{a}}) - \Lambda_n(\widetilde{\mathbf{a}})$$

$$= \left| \sum_{k=0}^{n} x_k \widetilde{c}_k^* \right| - \left| \sum_{k=0}^{n-1} x_k \widetilde{c}_k^* \right| - \frac{1}{2}\left\{ |\widetilde{c}_n|^2 g_0 + 2\,\mathrm{Re}\left[ \sum_{l=1}^{L} \widetilde{c}_n \widetilde{c}_{n-l}^* g_l \right] \right\}. \qquad (42)$$

The sequence general metric $\Lambda_{N_T}(\widetilde{\mathbf{a}})$ to maximize, can in this way be recurrently calculated. Due to the fact that the two summations in the (42) depend on the whole previous code sequence, the incremental metric has an unlimited memory that makes the calculation process difficult. Therefore, as in the case of |S| absence, the maximisation of the sequence general metric can be realized through a research on a tree diagram opportunely defined.

We can introduce now a truncation in the memory length of the incremental metric (42). To this purpose, in the first two summations of the (42) only the more recent $N \ll N_T$ terms are considered. The incremental metric obtained through this memory truncation is:

$$\lambda_n \overset{\Delta}{=} \left| \sum_{i=0}^{N-1} x_{n-i} \widetilde{c}_{n-i}^* \right| - \left| \sum_{i=1}^{N-1} x_{n-i} \widetilde{c}_{n-i}^* \right| - \frac{1}{2}\left\{ |\widetilde{c}_n|^2 g_0 + 2\,\mathrm{Re}\left[ \sum_{l=1}^{L} \widetilde{c}_n \widetilde{c}_{n-l}^* g_l \right] \right\} \qquad (43)$$

valid for $n \geq \max\{N-1, L\}$. As a consequence of the memory truncation, the maximization of the path sequence metric can be now recurrently made through a research on a appropriately defined trellis diagram, using the Viterbi algorithm with branch metrics given by the (43). Also in this case the parameter $N$ is comparable to a phase reconstruction memory.

Starting from the alternative approach (Forney) inborn in the strategy (40), using similar approximations a second non-coherent decoding diagram can be determined. The branch metrics obtained in this case can be expressed as follows:

$$\lambda_n \overset{\Delta}{=} \left| \sum_{i=0}^{N-1} z_{n-i} \widetilde{y}_{n-i}^* \right| - \left| \sum_{i=1}^{N-1} z_{n-i} \widetilde{y}_{n-i}^* \right| - \frac{1}{2}|\widetilde{y}_n|^2. \qquad (44)$$

Even if the two non-coherent receivers based on branch metrics (43) and (44) derive from two equivalent formulations of the optimum non-coherent strategy, they do not give however the same performance, considering that the approximations introduced have not the same effect in the two cases. In the case of the strategy (36) (Ungerboeck approach), the sample $x_n$ is correlated with the code symbol $\widetilde{c}_n$, while in the case of the strategy (40) (Forney approach), the sample $z_n$ is correlated with $\widetilde{y}_n$. Along the corrected path, the sequences $\{z_n\}$ and $\{\widetilde{y}_n\}$ differ only for the sequence of noise independent samples $\{w_n\}$, as it results from the (38), while sequences $\{x_n\}$ and $\{\widetilde{c}_n\}$ are significantly different due to ISI and noise correlation. These two effects tend to cancel in the sequence general metric, while they are significant in the branch metrics (43). Therefore, determined the complexity of the receiver, the sub-optimal receiver based on the strategy (40) (Forney approach) gives significantly better performance and shall then be taken as reference for the development of the receiver valid for non linear modulations.

As for the implementation of a receiver, whose operation is based on the assumptions of the previous description, that takes into account the ISI, the receiver RIC of fig.2 continues to be valid, with the appropriate modifications in the METRIC(s) blocks, and provided that the correct FRIC filter is used, differently specified for the two implementation approaches.

### 3° EMBODIMENT

Finally, it is considered the case of continuous phase non linear modulations, known with the acronym CPM . The complex envelope of a CPM signal, as known, has the form:

$$s(t,\mathbf{a}) = \sqrt{\frac{2E_s}{T}} \exp\left\{ j2\pi h \sum_n a_n q(t - nT) \right\} \qquad (45)$$

where $E_s$ is the power for information symbol, $T$ is the symbol interval, $h = k/p$ is the modulation index, ($k$ and $p$ are prime numbers between them), the information symbols $\{\alpha_n\}$ are assumed as independent, equiprobable, and at values of the M-ary alphabet $\{\pm 1, \pm 3, ... , \pm(M - 1)\}$ and vector $\mathbf{a}$ indicates the sequence of information symbols. It is not definitely considered the case of use of channel coding techniques but the following considerations can be easily extended. The function $q(t)$ is the phase response of the modulation and it is assumed that is satisfies the following normalization conditions:

$$q(t) = \begin{cases} 0 & \text{per } t \leq 0 \\ 1/2 & \text{per } t \geq L_q T \end{cases} \qquad (46)$$

where $L_q$ is a positive integer and $L_q T$ is the duration of the frequency pulse $g(t)$ defined by

$$g(t) \overset{\Delta}{=} \frac{dq(t)}{dt} \qquad (47)$$

Using a representation described in the following articles to express the (45):

- P. A. Laurent, «EXACT AND APPROXIMATE CONSTRUCTION OF DIGITAL PHASE MODULATIONS BY SUPERPOSITION OF AMPLITUDE MODULATED PULSES (AMP)», published on IEEE Trans. Commun., vol. 34, pp. 150-160, February 1986; and
- U. Mengali and M. Morelli, «DECOMPOSITION OF M-ary CPM SIGNALS INTO PAM WAVEFORMS», published on IEEE Trans. Information Theory, vol. 41, pp. 1265-1275, September 1995;

we come to the following correct expression of the complex envelope (45):

$$s(t,\mathbf{a}) = \sum_{k=0}^{Q^{\log_2 M}(M-1)-1} \sum_n \alpha_{k,n} h_k(t - nT) \qquad (48)$$

where: $M$, for notation simplicity, is assumed to be a power of 2, $Q \overset{\Delta}{=} 2^{L_q - 1}$, and the expressions of pulses $\{h_k(t)\}$ and of symbols $\{\alpha_{k,n}\}$ as function of the sequence of the information symbols $\{\alpha_n\}$ are reported in the just mentioned paper of Mengali and Morelli. Cutting the summation (48) at the first $K < Q^{\log_2 M}(M-1)$ terms, we obtain an approximation of $s(t,\mathbf{a})$. As shown in the last mentioned article, the signal power is concentrated in the first $M - 1$ components, that is, those associated to the pulses $\{h_k(t)\}$ with $0 < k \le M - 2$, called main pulses. Consequently, a value $K = M - 1$ can be used in the (48) to obtain the best compromise between the quality of the approximation and the number of component signals, it has been demonstrated that a receiver based on the sole main pulses gives a performance practically coinciding with that of optimum coherent receiver. For $K = M - 1$, the approximation based on the sole main pulses can be lightly improved modifying the pulses $\{h_k(t)\}$ in order to minimize the mean quadrant error between the signal and its approximation. For instance, for a quaternary CPM modulation, assuming $K = 3$ and breaking off the information symbol $\alpha_n \in \{\pm 1, \pm 3\}$ in two binary symbols $\gamma_{n,0}$ e $\gamma_{n,1}$ belonging to the alphabet $\{\pm 1\}$ we can write:

$$a_n = 2\gamma_{n,1} + \gamma_{n,0} \; . \tag{49}$$

In the assumption that modulation indexes $h$ of the (45) are not integer, the symbols associated to the first three component signals can be expressed in the form:

$$\begin{aligned}
\alpha_{0,n} &= \alpha_{0,n-1}e^{jh\pi a_n} \\
\alpha_{1,n} &= \alpha_{0,n-1}e^{j2h\pi\gamma_{n,1}} \\
\alpha_{2,n} &= \alpha_{0,n-1}e^{jh\pi\gamma_{n,0}}
\end{aligned} \tag{50}$$

With reference to fig.7, let's now introduce the sub-optimum non-coherent receiver for CPM signals, implemented as indicated by the reception process forming the object of the second embodiment of the present invention. As it can be noticed, the receiver RIC of fig.7 differs from that of fig.2 mainly due to the front-end structure, which in fig. 2 consists of a sole reception filter RIC followed by the sampler CAMP, while in fig.7 it consists of a whitened matched multidimensional filter WMF (Whitened Matched Filter). The front-end WMF includes a bank of numeric filters matched to relevant pulses $\{h_k(t)\}$, supplied in parallel by the reception signal $r(t)$, each one followed by a sampler at symbol cadence that sends its own samples $\{x_{k,n}\}$ to the input of a unique whitening filter WF (Whitening Filter) of the multidimensional type from which the samples $\mathbf{z}_n$ come out. The remaining structure is identical in the two figures, pointing out that, in fig.7, the delay chain $T$ is realized in a vectorial way, as well as vectorial is the calculation of the branch metrics made by the METRICTOT block, whose METRIC(s) blocks (fig.3) using (of course) different expressions versus those under the same name of fig.3.

Coming back to the procedure, we can easily demonstrate that the signals coming out from the filter bank matched to the pulses $h_k(t)$ of fig.7, sampled at symbol frequency, represent a statistic sufficient to the non-coherent detection of a CPM signal. This assumed, it is convenient to have recourse to a simplified representation of a CPM signal, based on the sole main pulses, enabling to obtain a significant complexity reduction, in practice without any performance reduction.

The signal coming out from a filter matched to the pulse $h_k(t)$, sampled at the instant $nT$, can be expressed in the form:

$$x_{k,n} \overset{\Delta}{=} r(t) \otimes h_k(-t)\big|_{t=nT} = s_{k,n}e^{j\theta} + n_{k,n} \tag{51}$$

where:

$$n_{k,n} \overset{\Delta}{=} w(t) \otimes h_k(-t)\big|_{t=nT} \tag{52}$$

$$s_{k,n} \overset{\Delta}{=} s(t,\mathbf{a}) \otimes h_k(-t)\big|_{t=nT} = \sum_{m=0}^{K-1}\sum_{i} \alpha_{m,i}g_{m,k}\big[(n-i)T\big] \tag{53}$$

$$g_{m,k}(t) \overset{\Delta}{=} h_m(t) \otimes h_k(-t). \tag{54}$$

As it can be noticed from the (53), $s_{k,n} \neq \alpha_{k,n}$ due to the ISI and the interference of the other component signals. Noise terms are also characterized by the mixed correlation function:

$$E\left\{n_m(t)n_k^*(t-\tau)\right\} = 2N_0 g_{m,k}(-\tau) \tag{55}$$

depending on the form of pulses $g_{m,k}(t)$.

The whitening filter WF has been introduced in the front-end WMF of fig.7 since we found convenient to submit the sequences coming out from the different filters matched to a whitening filter of the type described above for linear modulated signals (Forney approach), it is possible in this way to extent to the CPM modulation the advantage of a better operation performance though with a reduced complexity of the RIC receiver. To this purpose we define:

$$\mathbf{x}_n \overset{\Delta}{=} \left(x_{0,n}, x_{1,n}, \cdots, x_{K-1,n}\right)^T \tag{56}$$

$$\mathbf{s}_n \overset{\Delta}{=} \left(s_{0,n}, s_{1,n}, \cdots, s_{K-1,n}\right)^T \tag{57}$$

$$\mathbf{n}_n \overset{\Delta}{=} \left(n_{0,n}, n_{1,n}, \cdots, n_{K-1,n}\right)^T \tag{58}$$

$$\vec{\alpha}_n \overset{\Delta}{=} \left(\alpha_{0,n}, \alpha_{1,n}, \cdots, \alpha_{K-1,n}\right)^T \tag{59}$$

$$\mathbf{G}_n \overset{\Delta}{=} \left[g_{i,j}(nT)\right] \qquad i,j = 0,1,\cdots,K-1 \tag{60}$$

representing in the order indicated, in matrix notation and at the discrete time instant *n*, sampled signals ($\mathbf{x}_n$) coming out from the bank of *K* matched filters included in the WMF block, their signal ($\mathbf{s}_n$) and noise ($\mathbf{n}_n$) components, symbols

$\vec{\alpha}_{n\ \ n}$ of the *K* component signals of Laurent representation (48), and the samples of the response to the pulse at output of the matched filter bank, grouped in a matrix ($\mathbf{G}_n$) of $K \times K$ elements. By this matrix notation the vector of the observable, of *K* elements, can be expressed in the form:

$$\mathbf{x}_n = s_n e^{j\theta} + \mathbf{n}_n = e^{j\theta} \sum_{l=-L}^{L} \mathbf{G}_l^T \vec{\alpha}_{n-l} + \mathbf{n}_n \tag{61}$$

where *L,* tied to the duration $L_q T$ of the frequency pulse, is a parameter representing the memory associated to the modulation process. The matrix covariance function of the vectorial process at noise discrete time $\mathbf{n}_m$ can also be defined as:

$$\mathbf{R}_n(m) \overset{\Delta}{=} E\{\mathbf{n}_n \mathbf{n}_{n-m}^{*T}\} = 2N_0 \mathbf{G}_{-m} = 2N_0 \mathbf{G}_m^T \qquad (62)$$

where the property $g_{m,k}(t) = g_{k,m}(-t)$. has been used.

Proceeding to the bilateral Z transform $Z[\cdot]$ of matrix sequences previously introduced, we can define:

$$\mathbf{X}(z) \overset{\Delta}{=} Z[\mathbf{x}_n] = \sum_{m=-\infty}^{\infty} \mathbf{x}_m z^{-m} \qquad (63)$$

$$\mathbf{N}(z) \overset{\Delta}{=} Z[\mathbf{n}_n] = \sum_{m=-\infty}^{\infty} \mathbf{n}_m z^{-m} \qquad (64)$$

$$\mathbf{A}(z) \overset{\Delta}{=} Z[\bar{\alpha}_n] = \sum_{m=-\infty}^{\infty} \bar{\alpha}_m z^{-m} \qquad (65)$$

$$\mathbf{G}(z) \overset{\Delta}{=} Z[\mathbf{G}_n] = \sum_{m=-\infty}^{\infty} \mathbf{G}_m z^{-m} \qquad (66)$$

$$\bar{\Phi}(z) \overset{\Delta}{=} Z[\mathbf{R}_n(n)] = \sum_{m=-\infty}^{\infty} \mathbf{R}_n(m) z^{-m} = 2N_0 \mathbf{G}(z^{-1}) = 2N_0 \mathbf{G}^T(z). \qquad (67)$$

The spectral matrix $\bar{\Phi}(z)$ of the vectorial process $\mathbf{n}_n$ is certainly defined not negative on the unit radius circumference. We shall assume that it is defined positive for the reasons described below. In fact if the determinant $\left| \bar{\Phi}(z) \right|$ were null as well on the circumference of unit radius, it would be simple to demonstrate that in this case the time-discrete uncertain processes $\{n_{k,n}\}$ would be linearly dependent and therefore it should be possible to obtain an alternative sufficient statistic simply eliminating the outputs $\{x_{k,n}\}$ whose noise components can be expressed, with unitary probability, as linear combination of the other ones. Strictly speaking, for CPM signals there is no reasonable probability that this possibility is verified. However, in some practical cases it can occur that the matrix $\bar{\Phi}(z)$ is inappropriately conditioned. In this case a simple countermeasure consists in eliminating some component signals. For instance, in the case of the quaternary CPM with RC (Raised Cosine) frequency pulse with $L_q = 2$ main RC pulses, $h_1(t)$ and $h_2(t)$ are very similar. These pulses can be replaced by a mean pulse $h_e(t)$ to which the symbol $\alpha_{e,k} \overset{\Delta}{=} \alpha_{1,k} + \alpha_{2,k}$ corresponds.

In the hypothesis of spectral matrix $\bar{\Phi}(z)$ defined positive on the circumference of a unit radius it is possible to come to a factorization of the same that enables to perform the whitening filtering to obtain the advantages mentioned before. The factorization method can be obtained from the following articles:

- «THE FACTORIZATION OF DISCRETE-PROCESS SPECTRAL MATRICES», by P. R. Mothyka and J. A. Cadzow, published on IEEE Trans. Automat. Contr., vol. 12, pp. 698-707, December 1967;

- «FACTORIZATION OF DISCRETE-PROCESS SPECTRAL MATRICES», by D. N. Prabhakar Murthy, published on IEEE Trans. Inform. Theory, vol. 19, pp. 693-696, September 1973.

Applying the teaching contained in the following articles it is possible to find a matrix $\mathbf{F}(z)$ such that:

$$\bar{\Phi}(z) = 2N_0\mathbf{G}^T(z) = 2N_0\mathbf{F}(z^{-1})\mathbf{F}^T(z) \qquad (68)$$

and such that the determinant $|\mathbf{F}(z^{-1})|$ has no zeros inside the unit circle of convergence of the Z transform. Therefore a sufficient statistic, alternative to the one that can be obtained from a possible application of the Ungerboeck approach to the CPM modulation case, can be obtained filtering the vectorial signal $\{\mathbf{x}_n\}$ with a multidimensional filter WF of $K \times K$ elements whose transfer function is $\mathbf{F}^{-1}(z^{-1})$. The vector resulting from the filtering is:

$$\mathbf{z}_n = \mathbf{y}_n e^{j\theta} + \mathbf{w}_n \qquad (69)$$

where $\{\mathbf{y}_n\}$ is the result of the total filtering suffered by the useful component of said modulated signal $\{\mathbf{s}_n\}$.
The Z transform of the (61) is:

$$\mathbf{X}(z) = \mathbf{G}^T(z)\mathbf{A}(z)e^{j\theta} + \mathbf{N}(z) = \mathbf{F}(z^{-1})\mathbf{F}^T(z)\mathbf{A}(z)e^{j\theta} + \mathbf{N}(z). \qquad (70)$$

Consequently, the Z transform of $\{\mathbf{y}_n\}$ is:

$$\mathbf{Y}(z) = \sum_{m=-\infty}^{\infty}\mathbf{y}_m z^{-m} = \mathbf{F}^T(z)\mathbf{A}(z). \qquad (71)$$

We can demonstrate that the inverse Z transform of $\mathbf{F}(z)$ has only $L + 1$ non-null elements $\mathbf{F}_l$. Therefore the signal $\{\mathbf{y}_n\}$ can be expressed as:

$$\mathbf{y}_n = \sum_{l=0}^{L}\mathbf{F}_l^T \alpha_{n-l}. \qquad (72)$$

As it can be noticed, the vectorial form of the (72) is similar to the one of the scalar expression (39) for linear modulation with ISI, irrespective of the coding, this result is a consequence of the development of Laurent of CPM signals.
Since the spectral matrix of the time-discrete process of noise $\mathbf{w}_n$ is:

$$\bar{\Phi}_\mathbf{w}(z) = \mathbf{F}^{-1}(z^{-1})\bar{\Phi}_n(z)\mathbf{F}^{-1T}(z) = 2N_0\mathbf{I} \qquad (73)$$

the filter $\mathbf{F}^{-1}(z^{-1})$ is a multidimensional whitening filter, coinciding with the WF filter of fig.7, which can be construed as a generalization of the whitening filter used in the case of linear modulations with ISI (Forney approach). For the physical implementation of such a filter it is necessary to introduce a delay in order to assure causality.
The WMF front-end of the RIC receiver of fig.7 can be construed as a multidimensional whitened matched filter with 1 input and $K$ outputs, implemented through the cascade of a matched filter with 1 input and $K$ outputs and of a whitening filter having size $K \times K$. We have not considered the case of spectral matrix determinant $\bar{\Phi}_n(z)_n(z)$ with zeros on the circumference of unit radius considering that it is not a case of practical importance in CPM modulations. However, this situation can be faced availing of the concept pole-zero deletion, also used by Forney to define the whitened matched filter in case of signals with zeroes in the band.

Using $\{\mathbf{z}_n\}$ as sufficient statistic, we can easily determine the best non-coherent decision strategy for CPM modulations. Continuing as indicated, to come to the strategy (40) (Forney approach), we can see that this strategy for CPM modulations is an extension of the (40) where a summation on the $K$ components of the CPM signal is additionally present. Using the approximations already highlighted, which lead to the expression of the branch metric (44), branch metrics for CPM modulations assume now the following expression:

$$\lambda_n \stackrel{\Delta}{=} \left| \sum_{k=0}^{K-1} \sum_{i=0}^{N-1} z_{k,n-i} \, \widetilde{y}_{k,n-i}^{\bullet} \right| - \left| \sum_{k=0}^{K-1} \sum_{i=1}^{N-1} z_{k,n-i} \, \widetilde{y}_{k,n-i}^{\bullet} \right| - \frac{1}{2} \sum_{k=0}^{K-1} \left| \widetilde{y}_{k,n} \right|^2 \qquad (74)$$

where $\widetilde{y}_{k,n}$ is defined in an obvious manner according to the (72) according to the hypothetical sequence of information symbols. The number of states depends on $N$. For instance, using only the main pulses, that is a value $K = M - 1$, for

which $\vec{\alpha}_n{'}_n$ depends only on $\alpha_n$, see the (49) and (51), the number of states of the trellis is $S = M^{N+L-1}$ and can anyway be reduced employing the known techniques. It has been verified that, as in the case of linear modulations in absence of ISI, even using small values of N in the (74), the receiver RIC of fig.7 has a performance very similar to that obtained with coherent receivers used for modulated CPM signals.

The digital hardware of the RIC receiver of figures 1, 2, 3, and 8 for the cases considered A), B), C), D) and CPM, and possible receivers derived from the same, can be conveniently implemented through digital integrated circuits of the ASIC type (*Application Specific Integrated Circuit*). This implementation method can be preferred in respect to the use of a mathematical microprocessor in the cases where the receiver must reach high operation speeds. The high operation speed that can be obtained, can be drawn in itself from the modularity of the METRICTOT structure shown in fig.3, enabling the parallel processing of branch metrics.

**Claims**

1. Method for the non-coherent reception of sequences of information symbols ($\{\widetilde{c}_n\}$) obtained by digital modulation of the phase, or both the amplitude and the phase, of a carrier transmitted on a communication channel affected by Gaussian noise, including the steps of:

   - non-coherently demodulating the received signal ($r(t)$) and filtering in base band by a filter (FRIC) matched to the transmitted pulse;
   - sampling (CAMP) the filtered base band signal at symbol time for obtaining a sequence of complex samples ($\{x_n\}$) of the received signal ($r(t)$);
   - storing (SHF1) $N$ most recent complex samples;

   - calculating (METRICTOT) for each current complex sample ($x_n$) the branch metrics $\left( \lambda_n^{(s)} \right)$ on a trellis sequential diagram whose branches represent the transitions among states defined by all possible $N$-1 subsequences of complex coded symbols ($\{\widetilde{c}_n\}$); the analytical expression of said branch metrics $\left( \lambda_n^{(s)} \right)$ being derived from the theoretical expression of the maximum likelihood non-coherent sequence estimation;

   - processing said branch metrics $\left( \lambda_n^{(s)} \right)$ according to the Viterbi algorithm for obtaining path metrics by summing up branch metrics on individual paths in the trellis and selecting a path having the maximum metric to decide with maximum likelihood the sequence of transmitted symbols ($\{\widetilde{c}_n\}$),

   **characterized in that** in presence of linear modulations and ideal channel said analytical expression of the branch metric $\lambda_n$ assumes the following form:

$$\lambda_n = \left| \sum_{i=0}^{N-1} x_{n-i} \widetilde{c}_{n-i}^{\bullet} \right| - \left| \sum_{i=1}^{N-1} x_{n-i} \widetilde{c}_{n-i}^{\bullet} \right| - \frac{1}{2} \left| \widetilde{c}_n \right|^2$$

where: $\widetilde{c}_{n-i}$ are $N$ complex coded symbols univocally associated to a relevant trellis branch, the asterisk (*) denoting complex conjugate values; $x_{n-i}$ are $N$ said complex samples.

2.  The method of claim 1, **characterized in that** when said digital modulation is $M$-PSK, said analytical expression of the branch metric $\lambda_n$ becomes:

$$\lambda_n = \mathrm{Re}\left\{ \sum_{i=1}^{N-1} x_n x_{n-i}^{\bullet} \widetilde{c}_n^{\bullet} \widetilde{c}_{n-i} \right\}.$$

3.  The method of claim 1, **characterized in that** when said coded information symbols undergo a differential encoding according to $c_n = c_{n-1} a_n$, said analytical expression of the branch metrics $\lambda_n$ becomes:

$$\lambda_n = \left| \sum_{i=0}^{N-1} x_{n-i} \prod_{m=0}^{i-1} \widetilde{a}_{n-m}^{\bullet} \right| - \left| \sum_{i=1}^{N-1} x_{n-i} \prod_{m=0}^{i-1} \widetilde{a}_{n-m}^{\bullet} \right|$$

where the $\widetilde{a}_{n-m}^{\bullet}$ are $N$ uncoded $M$-PSK symbols univocally associated to a relevant branch of the trellis.

4.  The method of the claim 1, **characterized in that** when said digital modulation is $M$-QAM and quadrant differential code is used, said analytical expression of the branch metrics $\lambda_n$ becomes:

$$\lambda_n = \left| \sum_{i=0}^{N-1} x_{n-i}^{\bullet} \widetilde{\mu}_{n-i} \prod_{m=0}^{i-1} \widetilde{p}_{n-m}^{\bullet} \right| - \left| \sum_{i=1}^{N-1} x_{n-i}^{\bullet} \widetilde{\mu}_{n-i} \prod_{m=0}^{i-1} \widetilde{p}_{n-m}^{\bullet} \right| - \frac{1}{2} \left| \widetilde{a}_n \right|^2$$

where: $\tilde{a}_n$ are $N$ uncoded $M$-QAM symbols univocally associated to a relevant trellis branch; $\widetilde{p}_n$ are $N$ symbols assuming values $\{\pm 1, \pm j\}$; $\widetilde{\mu}_n$ is the symbol $\tilde{a}_n$ multiplied by a phasor performing a rotation of an angle multiple of $\pi/2$ that brings it in the first quadrant of the complex plane.

5.  The method of the claim 1, **characterized in that** when said digital modulation is $M$-PSK and convolutional code is used, said analytical expression of branch metrics $\lambda_n$ becomes:

$$\lambda_n = \left| \sum_{i=0}^{N/\eta-1} \sum_{l=0}^{\eta-1} x_{\eta(n-i)+l} \widetilde{c}_{\eta(n-i)+l}^{\bullet} \right| - \left| \sum_{i=1}^{N/\eta-1} \sum_{l=0}^{\eta-1} x_{\eta(n-i)+l} \widetilde{c}_{\eta(n-i)+l}^{\bullet} \right|$$

where: index $i$ run over the information symbols, $l$ scans the code symbols associated to the $(n - i)$ -th information symbol, and $1/\eta$ is the code rate.

6.  The method of the claim 1, **characterized in that** when said digital modulation is linear and the channel is dispersive with channel memory $L$ symbol time long, said analytical expression of the branch metrics $\lambda_n$ becomes:

$$\lambda_n = \left|\sum_{i=0}^{N-1} z_{n-i}\,\widetilde{y}_{n-i}^{\,*}\right| - \left|\sum_{i=1}^{N-1} z_{n-i}\,\widetilde{y}_{n-i}^{\,*}\right| - \frac{1}{2}\left|\widetilde{y}_n\right|^2 ,$$

where:

$$y_n = \sum_{l=0}^{L} f_l\, c_{n-l}\ , \qquad z_n = y_n e^{j\theta} + w_n\ ,$$

and :

    - $\{f_n\}$ is the discrete time pulse response of the dispersive channel after the sequence of said complex samples in base band is additionally filtered by a whitening filter such that a coloured noise at the input of said filter yields at the output a spectral density with constant power,
    - $\{w_n\}$ is a sequence of random pulses representing noise sample at the output of the whitening filter,
    - $\theta$ is the phase of the modulated carrier, considering the average value in said theoretical expression which the branch metric is derived from.

**7.** The method of the claim 1, **characterized in that** when said digital modulation is Continuous Phase Modulation and the complex envelope $s(t,\mathbf{a})$ of the received signal ($r(t)$) is linearized by summation of $K$ components $\displaystyle\sum_{n} \alpha_{k,n}\, h_k(t - nT)$ including main pulses $h_k(t)$ multiplied by relevant symbols $\alpha_{k,n}$, said analytical expression of the branch metrics $\lambda_n$ becomes:

$$\lambda_n = \left|\sum_{k=0}^{K-1}\sum_{i=0}^{N-1} z_{k,n-i}\,\widetilde{y}_{k,n-i}^{\,*}\right| - \left|\sum_{k=0}^{K-1}\sum_{i=1}^{N-1} z_{k,n-i}\,\widetilde{y}_{k,n-i}^{\,*}\right| - \frac{1}{2}\sum_{k=0}^{K-1}\left|\widetilde{y}_{k,n}\right|^2 ,$$

where:

    - $\widetilde{y}_{k,n}$ are the elements of a vector $\displaystyle \mathbf{y}_n = \sum_{l=0}^{L} \mathbf{F}_l^{T}\, \alpha_{n-l}.$ relevant to a component $k$ of the linearization,
    - $z_{k,n}$ are the elements of a vector $\mathbf{z}_n = \mathbf{y}_n e^{j\theta} + \mathbf{w}_n$ relevant to a component $k$ of the linearization,
    - $\mathbf{F}$ is a matrix representing a multidimensional $K \times K$ whitened filter (WF) matched to each component $k$ of the linearization, yielding at the output $k$ the noise vector $\mathbf{w}_n$ having uncorrelated components and constant power spectral density.

**8.** The method of any previous claim, **characterized in that** when said states are defined by a number of symbols less than $N$-1, the missing code symbols to the purposes of the calculation of said metrics being found in a relevant path surviving to said selection on the trellis operated by the Viterbi algorithm.

**9.** The method of any previous claim, **characterized in that** when said sequences of information symbols include also pilot symbols, known at the reception side, and at a discrete $k^{th}$ symbol time an said pilot symbol is recognized, said path metrics are subsequently calculated only on paths ending in states compatible with said pilot symbol.

**10.** The method of any previous claim, **characterized in that** when said code symbols ($\{c_n\}$), are information symbols ($\{a_n\}$) undergoing a differential coding (5) followed by a channel coding (6) invariant to phase rotations of said carrier, said trellis is built up on the uncoded information symbols ($\{a_n\}$) and the Viterbi algorithm is performing the maximum likelihood estimation of a sequence of said uncoded information symbols ($\{a_n\}$).

**Patentansprüche**

1. Verfahren für den nichtkohärenten Empfang von Sequenzen von Informationssymbolen ($\{\widetilde{c}_n\}$), die durch digitale Modulation der Phase oder sowohl der Amplitude als auch der Phase eines Trägers erhalten wurden, der auf einem von einem Gaußschen Rauschen überlagerten Kommunikationskanal übertragen wird, welches die folgenden Schritte umfasst:

   - nichtkohärentes Demodulieren des empfangenen Signals ($r(t)$) und Filtern im Basisband mittels eines Filters (FRIC), das an den gesendeten Impuls angepasst ist;
   - Abtasten (CAMP) des gefilterten Basisbandsignals mit Symbolzeit, um eine Sequenz von komplexen Samples ($\{x_n\}$) des empfangenen Signals ($r(t)$) zu erhalten;
   - Speichern (SHF1) der $N$ jüngsten komplexen Samples;

   - Berechnen (METRICTOT), für jedes aktuelle komplexe Sample ($x_n$), der Zweigmetriken $\left(\lambda_n^{(s)}\right)$ auf einem sequentiellen Trellis-Diagramm, dessen Zweige die Übergänge zwischen Zuständen repräsentieren, die durch alle möglichen N-1 Teilsequenzen von komplexen codierten Symbolen ($\{\widetilde{c}_n\}$) definiert sind; wobei der analytische Ausdruck für die besagten Zweigmetriken $\left(\lambda_n^{(s)}\right)$ aus dem theoretischen Ausdruck der nichtkohärenten Maximum-Likelihood-Sequenzschätzung abgeleitet ist;

   - Verarbeiten der besagten Zweigmetriken $\left(\lambda_n^{(s)}\right)$ gemäß dem Viterbi-Algorithmus, um Pfadmetriken zu erhalten, durch Aufsummieren der Zweigmetriken auf einzelnen Pfaden in dem Trellis und Auswählen eines Pfades, der die maximale Metrik aufweist, um die Sequenz der gesendeten Symbole ($\{\widetilde{c}_n\}$) nach dem Maximum-Likelihood-Prinzip zu entscheiden,

   **dadurch gekennzeichnet, dass** bei Vorliegen von linearen Modulationen und eines idealen Kanals der besagte analytische Ausdruck für die Zweigmetrik $\lambda_n$ die folgende Form annimmt:

   $$\lambda_n = \left|\sum_{i=0}^{N-1} x_{n-i}\widetilde{c}^{\,*}_{n-i}\right| - \left|\sum_{i=1}^{N-1} x_{n-i}\widetilde{c}^{\,*}_{n-i}\right| - \frac{1}{2}\left|\widetilde{c}_n\right|^2$$

   wobei gilt: $\widetilde{c}_{n-i}$ sind $N$ komplexe codierte Symbole, die eindeutig mit einem jeweiligen Trellis-Zweig verknüpft sind, wobei der Stern (*) konjugiert komplexe Werte bezeichnet; $x_{n-i}$ sind die $N$ besagten komplexen Samples.

2. Verfahren nach Anspruch 1, **dadurch gekennzeichnet, dass**, wenn die besagte digitale Modulation $M$-PSK ist, der besagte analytische Ausdruck für die Zweigmetrik $\lambda_n$ die Form annimmt:

   $$\lambda_n = \mathrm{Re}\left\{\sum_{i=1}^{N-1} x_n x^*_{n-i}\widetilde{c}^{\,*}_n\widetilde{c}_{n-i}\right\}.$$

3. Verfahren nach Anspruch 1, **dadurch gekennzeichnet, dass**, wenn die besagten codierten Informationssymbole einer differentiellen Codierung gemäß $c_n = c_{n-1}a_n$ unterzogen werden, der besagte analytische Ausdruck für die Zweigmetriken $\lambda_n$ die Form annimmt:

   $$\lambda_n = \left|\sum_{i=0}^{N-1} x_{n-i}\prod_{m=0}^{i-1}\widetilde{a}^{\,*}_{n-m}\right| - \left|\sum_{i=1}^{N-1} x_{n-i}\prod_{m=0}^{i-1}\widetilde{a}^{\,*}_{n-m}\right|$$

   wobei die $\widetilde{a}^{\,*}_{n-m}$ $N$ uncodierte $M$-PSK-Symbole sind, die eindeutig mit einem jeweiligen Zweig des Trellis verknüpft sind.

4. Verfahren nach Anspruch 1, **dadurch gekennzeichnet, dass**, wenn die besagte digitale Modulation *M*-QAM ist und ein quadrant-differentieller Code (Quadrant Differential Code) verwendet wird, der besagte analytische Ausdruck für die Zweigmetriken $\lambda_n$ die Form annimmt:

$$\lambda_n = \left| \sum_{i=0}^{N-1} x_{n-i}^* \widetilde{\mu}_{n-i} \prod_{m=0}^{i-1} \widetilde{p}_{n-m}^* \right| - \left| \sum_{i=1}^{N-1} x_{n-i}^* \widetilde{\mu}_{n-i} \prod_{m=0}^{i-1} \widetilde{p}_{n-m}^* \right| - \frac{1}{2} \left| \widetilde{a}_n \right|^2$$

wobei gilt: $\tilde{a}_n$ sind *N* uncodierte *M*-QAM-Symbole, die eindeutig mit einem jeweiligen Trellis-Zweig verknüpft sind; $\widetilde{p}_n$ sind *N* Symbole, welche die Werte $\{\pm 1, \pm j\}$ annehmen; $\widetilde{\mu}_n$ ist das Symbol $\tilde{a}_n$, multipliziert mit einem Phasor, welcher eine Rotation um einen Winkel bewirkt, der ein Vielfaches von $\pi/2$ ist, und welcher es in den ersten Quadranten der komplexen Ebene bringt.

5. Verfahren nach Anspruch 1, **dadurch gekennzeichnet, dass**, wenn die besagte digitale Modulation *M*-PSK ist und ein Faltungscode verwendet wird, der besagte analytische Ausdruck für die Zweigmetriken $\lambda_n$ die Form annimmt:

$$\lambda_n = \left| \sum_{i=0}^{N/\eta-1} \sum_{l=0}^{\eta-1} x_{\eta(n-i)+l} \widetilde{c}_{\eta(n-i)+l}^* \right| - \left| \sum_{i=1}^{N/\eta-1} \sum_{l=0}^{\eta-1} x_{\eta(n-i)+l} \widetilde{c}_{\eta(n-i)+l}^* \right|$$

wobei *i* die Informationssymbole durchläuft, *l* die Codesymbole durchläuft, die mit dem (*n-i*)-ten Informationssymbol verknüpft sind, und $1/\eta$ die Coderate ist.

6. Verfahren nach Anspruch 1, **dadurch gekennzeichnet, dass**, wenn die besagte digitale Modulation linear ist und der Kanal dispersiv ist, mit einem Kanalspeicher, der *L* Symbolzeiten lang ist, der besagte analytische Ausdruck für die Zweigmetriken $\lambda_n$ die Form annimmt:

$$\lambda_n = \left| \sum_{i=0}^{N-1} z_{n-i} \widetilde{y}_{n-i}^* \right| - \left| \sum_{i=1}^{N-1} z_{n-i} \widetilde{y}_{n-i}^* \right| - \frac{1}{2} \left| \widetilde{y}_n \right|^2 \ ,$$

wobei:

$$y_n = \sum_{l=0}^{L} f_l c_{n-l} \ , \qquad z_n = y_n e^{j\theta} + w_n \ ,$$

und:

- $\{f_n\}$ die zeitdiskrete Impulsantwort des dispersiven Kanals ist, nachdem die Sequenz der besagten komplexen Samples im Basisband zusätzlich durch ein Whitening Filter gefiltert wurde, derart, dass ein farbiges Rauschen am Eingang des besagten Filters am Ausgang eine Spektraldichte mit konstanter Leistung liefert,
- $\{w_n\}$ eine Sequenz von zufälligen Impulsen ist, die Rausch-Samples am Ausgang des Whitening Filters repräsentieren,
- $\theta$ die Phase des modulierten Trägers ist, wenn man den Mittelwert in dem besagten theoretischen Ausdruck betrachtet, von welchem die Zweigmetrik abgeleitet ist.

7. Verfahren nach Anspruch 1, **dadurch gekennzeichnet, dass**, wenn die besagte digitale Modulation kontinuierliche Phasenmodulation ist und die komplexe Einhüllende *s*(*t*, **a**) des empfangenen Signals (*r*(*t*)) durch Summation von

$K$ Komponenten $\displaystyle\sum_{n}\alpha_{k,n}h_k(t-nT)$ linearisiert wird, welche Hauptimpulse $h_k(t)$ enthalten, die mit den jeweiligen Symbolen $\alpha_{k,n}$ multipliziert sind, der besagte analytische Ausdruck für die Zweigmetriken $\lambda_n$ die Form annimmt:

$$\lambda_n = \left|\sum_{k=0}^{K-1}\sum_{i=0}^{N-1} z_{k,n-i}\,\widetilde{y}_{k,n-i}^{*}\right| - \left|\sum_{k=0}^{K-1}\sum_{i=1}^{N-1} z_{k,n-i}\,\widetilde{y}_{k,n-i}^{*}\right| - \frac{1}{2}\sum_{k=0}^{K-1}\left|\widetilde{y}_{k,n}\right|^2 \,,$$

wobei:

- $\widetilde{y}_{k,n}$ die Elemente eines Vektors $\displaystyle \mathbf{y}_n = \sum_{l=0}^{L}\mathbf{F}_l^T \alpha_{n-l}$ sind, der zu einer Komponente $k$ der Linearisierung gehört,

- $z_{k,n}$ die Elemente eines Vektors $\mathbf{z}_n = \mathbf{y}_n e^{j\theta} + \mathbf{w}_n$ sind, der zu einer Komponente $k$ der Linearisierung gehört,
- $\mathbf{F}$ eine Matrix ist, die ein mehrdimensionales $K \times K$ Whitening Filter (WF) repräsentiert, das an die jeweilige Komponente $k$ der Linearisierung angepasst ist und am Ausgang $k$ den Rauschvektor $\mathbf{w}_n$ liefert, der unkorrelierte Komponenten und eine konstante spektrale Leistungsdichte aufweist.

8. Verfahren nach einem der vorhergehenden Ansprüche, **dadurch gekennzeichnet, dass**, wenn die besagten Zustände durch eine Anzahl von Symbolen definiert sind, die kleiner als $N$-1 ist, die fehlenden Codesymbole für die Zwecke der Berechnung der besagten Metriken in einem jeweiligen Pfad gefunden werden, der nach der besagten Auswahl auf dem Trellis, die durch den Viterbi-Algorithmus vorgenommen wird, übrig bleibt.

9. Verfahren nach einem der vorhergehenden Ansprüche, **dadurch gekennzeichnet, dass**, wenn die besagten Sequenzen von Informationssymbolen auch Pilotsymbole enthalten, die auf der Empfangsseite bekannt sind, und wenn zu einer diskreten $k$-ten Symbolzeit ein besagtes Pilotsymbol erkannt wird, die besagten Pfadmetriken anschließend nur auf Pfaden berechnet werden, welche in Zuständen enden, die mit dem besagten Pilotsymbol kompatibel sind.

10. Verfahren nach einem der vorhergehenden Ansprüche, **dadurch gekennzeichnet, dass**, wenn die besagten Codesymbole ($\{c_n\}$) Informationssymbole ($\{a_n\}$) sind, die einer differentiellen Codierung (5) unterzogen werden, welcher eine Kanalcodierung (6) folgt, die invariant bezüglich Phasenrotationen des besagten Trägers ist, das besagte Trellis auf den uncodierten Informationssymbolen ($\{a_n\}$) aufgebaut wird und der Viterbi-Algorithmus die Maximum-Likelihood-Schätzung einer Sequenz der besagten uncodierten Informationssymbole ($\{a_n\}$) durchführt.

**Revendications**

1. Procédé de réception non cohérente de séquences de symboles de données ($\{\widetilde{c}_n\}$) obtenues par modulation numérique de la phase, ou à la fois de l'amplitude et de la phase, d'une porteuse transmise sur une voie de communication affectée par un bruit Gaussien, incluant les étapes consistant à :

- démoduler de manière non cohérente le signal reçu ($r(t)$) et filtrer dans la bande de base par un filtre (FRIC) correspondant à l'impulsion transmise :
- échantillonner (CAMP) le signal de bande de base filtré au temps de symbole pour obtenir une séquence d'échantillons complexes ($\{x_n\}$) du signal reçu ($r(t)$) ;
- mémoriser (SHF1) $N$ échantillons complexes les plus récents ;

- calculer (METRICTOT) pour chaque échantillon complexe ($x_n$) actuel la métrique de branche $\left(\lambda_n^{(s)}\right)$ sur un schéma séquentiel en treillis dont les branches représentent les transitions parmi des états définis par toutes les sous-séquences possibles $N$-1 de symboles codés complexes ($\{\widetilde{c}_n\}$) ; l'expression analytique de ladite métrique de branche $\left(\lambda_n^{(s)}\right)$ étant dérivée de l'expression théorique de l'estimation de séquences non cohérentes à probabilité maximale ;

- traiter ladite métrique de branche $(\lambda_n^{(s)})$ selon l'algorithme Viterbi pour obtenir la métrique des chemins en sommant la métrique de branche sur des chemins individuels dans le treillis et sélectionner un chemin avec la métrique maximale pour déterminer avec le maximum de probabilité la séquence de symboles transmis ($\{\widetilde{c}_n\}$),

**caractérisé en ce que**, en présence de modulations linéaires et de voie idéale, ladite expression analytique de la métrique de branche $\lambda_n$ suppose la forme suivante :

$$\lambda_n = \left| \sum_{i=0}^{N-1} x_{n-i} \widetilde{c}_{n-i}^{*} \right| - \left| \sum_{i=1}^{N-1} x_{n-i} \widetilde{c}_{n-i}^{*} \right| - \frac{1}{2} \left| \widetilde{c}_n \right|^2$$

où : $\widetilde{c}_{n-i}$ sont $N$ symboles codés complexes associés de manière univoque à une branche de treillis correspondante, l'astérisque (*) repérant des valeurs conjuguées complexes ; $x_{n-i}$ sont $N$ desdits échantillons complexes.

2. Procédé selon la revendication 1, **caractérisé en ce que** ladite modulation numérique est $M$-PSK, ladite expression analytique de la métrique de branche $\lambda_n$ devient :

$$\lambda_n = \mathrm{Re}\left\{ \sum_{i=1}^{N-1} x_n x_{n-i}^{*} \widetilde{c}_n^{*} \widetilde{c}_{n-i} \right\}$$

3. Procédé selon la revendication 1, **caractérisé en ce que** lesdits symboles de données codés sont soumis à un codage différentiel selon $c_n = c_{n-1} a_n$, ladite expression analytique de la métrique de branche $\lambda_n$ devient :

$$\lambda_n = \left| \sum_{i=0}^{N-1} x_{n-i} \prod_{m=0}^{i-1} \widetilde{a}_{n-m}^{*} \right| - \left| \sum_{i=1}^{N-1} x_{n-i} \prod_{m=0}^{i-1} \widetilde{a}_{n-m}^{*} \right|$$

où les $\widetilde{a}_{n-m}^{*}$ sont $N$ symboles $M$-PSK non codés associés de manière univoque à une branche correspondante du treillis.

4. Procédé selon la revendication 1, **caractérisé en ce que** lorsque ladite modulation numérique est $M$-QAM et le code différentiel à quadrants est utilisé, ladite expression analytique de la métrique de branche $\lambda_n$ devient :

$$\lambda_n = \left| \sum_{i=0}^{N-1} x_{n-i}^{*} \widetilde{\mu}_{n-i} \prod_{m=0}^{i-1} \widetilde{p}_{n-m}^{*} \right| - \left| \sum_{i=1}^{N-1} x_{n-i}^{*} \widetilde{\mu}_{n-i} \prod_{m=0}^{i-1} \widetilde{p}_{n-m}^{*} \right| - \frac{1}{2} \left| \widetilde{a}_n \right|^2$$

où : $\widetilde{a}_n$ sont $N$ symboles $M$-QAM non codés associés de manière univoque à une branche de treillis correspondante ; $\widetilde{p}_n$ sont $N$ symboles supposant les valeurs $\{\pm 1, \pm j\}$ ; $\widetilde{\mu}_n$ est le symbole $\widetilde{a}_n$ multiplié par un vecteur tournant réalisant une rotation d'un angle multiple de $\pi/2$ qui l'amène dans le premier quadrant du plan complexe.

5. Procédé selon la revendication 1, **caractérisé en ce que** lorsque la modulation numérique est $M$-PSK et le code de convolution est utilisé, ladite expression analytique de la métrique de branche $\lambda_n$ devient :

$$\lambda_n = \left| \sum_{i=0}^{N/\eta-1} \sum_{l=0}^{\eta-1} x_{\eta(n-i)+l} \widetilde{c}_{\eta(n-i)+l}^{*} \right| - \left| \sum_{i=1}^{N/\eta-1} \sum_{l=0}^{\eta-1} x_{\eta(n-i)+l} \widetilde{c}_{\eta(n-i)+l}^{*} \right|$$

où : l'indice $i$ dépasse les symboles de données, 1 analyse les symboles de code associés au $(n\text{-}i)$ème symbole de données, et $1/\eta$ est le taux de codage.

**6.** Procédé selon la revendication 1, **caractérisé en ce que**, lorsque ladite modulation numérique est linéaire et la voie est dispersive avec un temps de symbole de la mémoire de voie $L$ long, ladite expression analytique de la métrique de branche $\lambda_n$ devient :

$$\lambda_n = \left| \sum_{i=0}^{N-1} z_{n-i} \widetilde{y}_{n-i}^* \right| - \left| \sum_{i=1}^{N-1} z_{n-i} \widetilde{y}_{n-i}^* \right| - \frac{1}{2} \left| \widetilde{y}_n \right|^2$$

où :

$$y_n = \sum_{l=0}^{L} f_l c_{n-1} \, , \qquad z_n = y_n e^{j\theta} + w_n$$

et :

- $\{f_n\}$ est la réponse impulsionnelle en temps discrète de la voie dispersive une fois que la séquence desdits échantillons complexes dans la bande de base est filtrée en plus par un filtre blanchissant de telle sorte qu'un bruit coloré au niveau de l'entrée dudit filtre produit à la sortie une densité spectrale à puissance constante,
- $\{w_n$ est une séquence d'impulsions aléatoires représentant un échantillon de bruit à la sortie du filtre blanchissant,
- $\theta$ est la phase de la porteuse modulée, en prenant en compte la valeur moyenne dans ladite expression théorique dont la métrique de branche est déirvée.

**7.** Procédé selon la revendication 1, **caractérisé en ce que** ladite modulation numérique est une modulation en phase continue et l'enveloppe complexe $s(t,$ a) du signal reçu ($r(t)$) est linéarisée par sommation des composants $K$

$$\sum_n \alpha_{k,n} h_k (t - nT)$$ incluant des impulsions principales $h_k(t)$ multipliées par les symboles correspondants $\alpha_{k,n}$,

ladite expression analytique de la métrique de branche $\lambda_n$ devient :

$$\lambda_n = \left| \sum_{k=0}^{K-1} \sum_{i=0}^{N-1} z_{k,n-i} \widetilde{y}_{k,n-i}^* \right| - \left| \sum_{k=0}^{K-1} \sum_{i=1}^{N-1} z_{k,n-i} \widetilde{y}_{k,n-i}^* \right| - \frac{1}{2} \sum_{k=0}^{K-1} \left| \widetilde{y}_{k,n} \right|^2 ,$$

où

- $\widetilde{y}_{k,n}$ sont les éléments d'un vecteur $y_n = \sum_{l=0}^{L} \mathbf{F}_l^T \alpha_{n-l}$ correspondant à un composant $k$ de la linéarisation,
- $z_{k,n}$ sont les éléments d'un vecteur $z_n = y_n e^{j\theta} + w_n$ correspondant à un composant $k$ de la linéarisation,
- $\mathbf{F}$ est une matrice représentant un filtre blanchi (WF) $K \times K$ multidimensionnel adapté à chaque composant $k$ de la linéarisation, produisant à la sortie $k$, le vecteur de bruit $w_n$ comportant des composants non corrélés et une densité spectrale à puissance constante.

**8.** Procédé selon l'une quelconque des revendications précédentes, **caractérisé en ce que** lesdits états sont définis par un nombre de symboles inférieur à $N$ - 1, les symboles de codes manquants pour les besoins du calcul de ladite métrique étant trouvés dans un chemin correspondant restant après ladite sélection sur le treillis réalisée par l'algorithme de Viterbi.

**9.** Procédé selon l'une quelconque des revendications précédentes, **caractérisé en ce que** lesdites séquences des symboles de données incluent également des symboles pilotes, connus à la réception, et à un $k^{ème}$ temps de symbole discret, un desdits symboles pilotes est reconnu, ladite métrique des chemins est calculée par la suite uniquement sur les chemins finissant dans des états compatibles avec ledit symbole pilote.

**10.** Procédé selon l'une quelconque des revendications précédentes, **caractérisé en ce que** lorsque lesdits symboles de code ($\{c_n\}$) sont des symboles de données ($\{a_n\}$) subissant un codage différentiel (5) suivi d'un codage de voie (6) invariant en fonction des rotations de phase de ladite porteuse, ledit treillis est créé d'après les symboles de données non codés ($\{a_n\}$) et l'algorithme de Viterbi réalise l'estimation de probabilité maximale d'une séquence desdits symboles de données non codés ($\{a_n\}$).

EP 1 531 572 B1

TRAS

CAN

RIC

COD

MOD

DISP

$e^{j\theta}$

$w(t)$

$\{a_n\}$

$\{c_n\}$

$s(t,\mathbf{a})$

1

2

$r(t)$

$\{\hat{a}_n\}$

**FIG. 1**

$\longrightarrow$ complex signal

5

6

7

$\{a_n\}$

$\{b_n\}$

$\{c_n\}$

$\{a_n\}$

$\{c_n\}$

**FIG. 5**

**FIG. 6**

FIG. 2

EP 1 531 572 B1

FIG. 3

33

FIG. 4

FIG. 7

real signal
complex signal
$N$ complex signals

EP 1 531 572 B1